# EUROPÄISCHE PATENTSCHRIFT

(11) **EP 2 115 858 B1**
(45) Veröffentlichungstag und Bekanntmachung des Hinweises auf die Patenterteilung: **03.09.2014**
(21) Anmeldenummer: 08708355.6
(22) Anmeldetag: 29.01.2008
(51) Int. Cl.: H02K 3/28

(54) **MEHRPHASIGE ELEKTRISCHE MASCHINE**
POLYPHASE ELECTRICAL MACHINE
MACHINE ÉLECTRIQUE POLYPHASE

(30) Priorität: 29.01.2007 DE 102007005742
(43) Veröffentlichungstag der Anmeldung: 11.11.2009
(73) Patentinhaber: Robert Bosch GmbH, 70442 Stuttgart (DE)
(72) Erfinder: WOLF, Gert, 71563 Affalterbach (DE); PFITZKE, Norbert, 71701 Schwieberdingen (DE); BERGER, Thomas, 71254 Ditzingen (DE); RAU, Eberhard, 70825 Korntal-Muenchingen (DE); SHENDI, Alexander, 71679 Asperg (DE)
(86) Internationale Anmeldenummer: PCT/EP2008/051038
(87) Internationale Veröffentlichungsnummer: WO 2008/092858

(56) Entgegenhaltungen:
- EP-A- 1 296 439
- EP-A- 1 324 462
- WO-A-2006/122985
- US-A1- 2006 208 594

## Beschreibung

### Stand der Technik

Die Erfindung betrifft eine mehrphasige elektrische Maschine, insbesondere einen mehrphasigen Generator, mit einem Stator, der einen eine umfängliche Nutteilung aufweisenden Kernkörper und eine Wicklungsanordnung mit mehreren, Phasen bildenden Wicklungen aufweist. Weiterhin betrifft die Erfindung ein Verfahren zur Herstellung einer entsprechenden mehrphasigen elektrischen Maschine.

Eine mehrphasige elektrische Maschine der eingangs genannten Art ist zum Beispiel als Wechselstromgenerator bekannt. Dieser Wechselstromgenerator weist einen Stator (Ständer) mit einem als Statorblechpaket ausgebildeten Kernkörper (Ständereisen) auf, in dessen Nuten Wicklungen für drei, zwei mal drei oder sechs Phasen eingesetzt sind. Die Wicklungen sind dabei zueinander versetzt angeordnet. Bei einem dreiphasigen Generator entsteht durch elektromagnetische Kräfte ein unerwünschtes Magnetgeräusch. Zur Reduzierung dieses Magnetgeräuschs sind spezielle Wicklungsanordnungen vorgesehen, die zum Beispiel aus zwei elektrisch getrennten Teilsystemen bestehen. Jedes Teilsystem besteht aus drei Phasen, die gegeneinander um elektrisch 120° versetzt sind. Zu jeder Phase des ersten Teilsystems ist eine Phase des zweiten Teilsystems um elektrisch 30° versetzt angeordnet. Die Wicklungen jeder der beiden Teilsysteme sind zum Beispiel in Stern oder Dreieck verschaltet. Jeder Verschaltungspunkt (Stromausgang, beziehungsweise Wicklungsanschluss) einer Wicklung ist mit einer Gleichrichterbrücke verschaltet. Insgesamt werden sechs Gleichrichterbrücken verwendet. Die verwendeten Wicklungen sind vorgefertigte Wicklungen, die zum Beispiel durch Ausformen von sternförmigen Wicklungseinheiten mit rechteckigen Umfangsabschnitten erstellt werden. Anschließend werden diese Wicklungseinheiten in den als Statorblechpaket ausgebildeten Kernkörper eingebracht. Bei einem zwei mal dreiphasigen System werden sechs dieser sternförmigen Wicklungseinheiten eingebracht, wobei zu jeder Phase eines ersten dreiphasigen Systems eine Phase des anderen dreiphasigen Systems vorhanden ist, die um 30° elektrisch versetzt angeordnet ist. Durch die hohe Anzahl der Phasen (Phasenanzahl) bei sechsphasigen und zwei mal dreiphasigen elektrischen Maschinen ergibt sich - bei gleicher Anzahl magnetischer Pole eines zugehörigen Rotors -eine höhere Anzahl von Nuten als bei elektrischen Maschinen mit niedrigerer Phasenanzahl. Eine hohe Anzahl an Nuten beschränkt jedoch den Durchmesser der verwendeten Wicklungsdrähte bezogen auf den Durchmesser des Stators. Weiterhin muss eine elektrische Maschine mit höherer Phasenanzahl präziser gefertigt werden.

Des Weiteren offenbart die WO 2006/122985 A eine fünfphasige elektrische Maschine mit einem Stator mit einem Kernkörper, der an seinem Umfang eine Nutteilung aufweist. Jede Wicklung und jede Nut einer sich über eine Polteilung erstreckenden Nutgruppe ist einer Phase zugeordnet.

### Offenbarung der Erfindung

Die Erfindung offenbart eine mehrphasige elektrische Maschine mit den Merkmalen des Anspruchs 1. Eine derartige Anordnung hat den Vorteil, dass sowohl das magnetische Geräusch als auch das Strömungsgeräusch reduziert ist. Ein weiterer Vorteil besteht darin, dass die Welligkeit der gleichgerichteten Generatorspannung vermindert und dadurch Leistung und Wirkungsgrad verbessert ist. Ein weiterer Vorteil besteht darin, dass der einfache Aufbau der Maschine dazu genutzt werden kann, ein kostengünstiges Fertigungsverfahren einzusetzen und dabei eine noch bessere Ausführungsqualität zu erhalten. Zum Aufbau einer Wicklungsanordnung der erfindungsgemäßen elektrischen Maschine werden zum Beispiel vorgefertigte Wicklungen verwendet. Diese lassen sich maschinell herstellen und maschinell in den Kernkörper (das Ständereisen) montieren, z.B. einlegen, einziehen beziehungsweise einstecken. Die Wicklungen sind dabei radial und in Umfangsrichtung zueinander geschichtet angeordnet. Eine fünfphasige elektrische Maschine lässt gegenüber einer elektrischen Maschine mit einem zwei mal dreiphasigen System beziehungsweise einer sechsphasigen elektrischen Maschine einen größeren Drahtdurchmesser zu, da sich aus der kleineren Anzahl der Nuten bei gleichem Statordurchmesser (Ständerdurchmesser) eine größere Nutfläche ergibt bei entsprechend gleicher Polzahl und Wicklungsschaltung. Durch den größeren Drahtdurchmesser ist die Robustheit und mechanische Belastbarkeit der elektrischen Maschine höher. Daneben ermöglicht die geringere Anzahl von Nuten höhere Fertigungstoleranzgrenzen. Gleichzeitig ist das Geräuschverhalten einer fünfphasigen elektrischen Maschine günstiger als bei einer dreiphasigen elektrischen Maschine. Unter Radiallage soll die genaue Position in radialer Richtung für die Wicklung in den Wickelköpfen verstanden werden.

Insbesondere ist vorgesehen, dass die jeweiligen Wickelkopfverbindungen einer Wicklung in einer in etwa einheitlichen und für jede Wicklung spezifischen Radiallage angeordnet sind.

Mit Vorteil ist vorgesehen, dass die Anzahl der Nuten einem Vielfachen der Phasenanzahl entspricht. Dadurch ist eine so genannte Durchmesserwicklung möglich, die leistungsfähiger ist.

Nach einer Weiterbildung der Erfindung ist vorgesehen, dass die Anzahl der Radiallagen der Phasenanzahl oder einem Vielfachen der Phasenanzahl entspricht. Bei einer Phasenanzahl von fünf ist die Radiallagenzahl (Anzahl der radialen Lagen) der Wickelkopfverbindungen insbesondere ebenfalls fünf, sodass eine besonders einfach aufgebaute und robuste Wicklungsanordnung entsteht.

Weiterhin ist vorgesehen, dass die Wicklungen einfache Wicklungen oder verteilte Wicklungen sind. Bei einer einfachen Wicklung verlaufen die sich den Wicklungsabschnitten anschließenden Wickelkopfverbindungen nach dem axialen Austreten aus der Nut in eine Umfangsrichtung, beziehungsweise im Wesentlichen in eine Umfangsrichtung. Bei einer verteilten Wicklung verlaufen die sich den Wicklungsabschnitten anschließenden Wickelkopfverbindungen nach dem axialen Austreten aus der Nut im Wesentlichen gleich verteilt in beide Umfangsrichtungen. Als einfache Wicklungen ausgebildete Einziehwicklungen sind einfach in den Kernkörper einzubringen. Da jede der Wickelkopfverbindungen in einer ihr zugeordneten Radiallage eingebracht ist, ist die Befüllung der Nuten mit den zugehörigen Wicklungsabschnitten bei einfachen Wicklungen jedoch nur gering. Durch Verwendung von verteilten Wicklungen erhöht sich die Befüllung der Nuten. Bei der Befüllung mit einfachen Wicklungen ergeben sich bei gleichem Füllfaktor gegenüber der verteilten Wicklung höhere Montagekräfte, wodurch sich eine größere Wahrscheinlichkeit eines Auftretens von Drahtbeschädigungen ergibt.

Insbesondere ist vorgesehen, dass die Wicklungen als Schleifenwicklungen oder als Wellenwicklungen ausgebildet sind. Beides sind Wickelarten, die maschinell in den Kernkörper eingebracht werden können.

Weiterhin ist vorgesehen, dass jede der Nuten eine maximale Nutbreite aufweist, die größer ist als der zweifache Durchmesser eines Wicklungsdrahtes, aus dem die Wicklungen gewickelt sind. Dadurch können bei gleichzeitigem Vorhandensein einer Nutisolation in einer Nut zwei Wicklungsabschnitte, in derselben radialen Schicht in Umfangsrichtung nebeneinander angeordnet werden. Dies optimiert die Verwendung von verteilten Wicklungen.

Insbesondere ist vorgesehen, dass jede der Nuten an ihrem radial inneren Ende einen Nutschlitz aufweist, dessen Nutschlitzbreite kleiner als der zweifache Durchmesser des Wicklungsdrahtes ist. Durch diese nur teilweise geöffnete Nut mit minimaler Nutschlitzbreite werden die in die Nut eingebrachten Drähte für die insbesondere paarweise nebeneinander liegenden Wicklungsabschnitte der Wicklungen gehalten, wobei eine hinreichend kleine Nutschlitzbreite entsteht.

Weiterhin ist vorgesehen, dass die maximale Nutbreite kleiner ist als eine Jochhöhe des als Statorblechpaket ausgebildeten Kernkörpers.

Nach einer Weiterbildung der Erfindung ist vorgesehen, dass das Verhältnis der maximalen Nutbreite zur Jochhöhe des Statorblechpaketes im Bereich zwischen 0,5 und 0,9 liegt. Somit gilt für das Verhältnis der Nutbreite O zur Jochhöhe R: 0,5 < O/R < 0,9.

Insbesondere ist vorgesehen, dass jede der Nuten eine Nuttiefe aufweist, wobei das Verhältnis der Jochhöhe zur Nuttiefe im Bereich zwischen 0,3 und 0,5 liegt. Somit gilt für das Verhältnis der Jochhöhe R zur Nuttiefe Q: 0,3 < R/Q < 0,5.

Mit Vorteil ist vorgesehen, dass das Verhältnis der Jochhöhe zum Außenumfang des Stators kleiner als 0,015 ist. Die Jochhöhe ist bei radial innenliegenden Nuten die radiale Höhe zwischen Außendurchmesser des Kernkörpers und dem Nutgrund. Hierdurch ergibt sich für das in Weiterbildung der Erfindung ferner vorgesehene flache Ständerpaket, das nach Einlegen der Wicklungen in eine runde Form gebogen wird, ein optimiertes Biegeverhalten.

Mit Vorteil ist ein Rotor mit einer Polzahl vorgesehen, die multipliziert mit der Phasenanzahl die Anzahl der Nuten ergibt. Ist der Stator bei fünf Phasen zum Beispiel für einen Rotor mit zwölf Polen ausgelegt, so ergibt sich eine Anzahl von 60 Nuten.

Weiterhin ist vorgesehen, dass der Rotor einen magnetisch aktiven Teil mit einem Außendurchmesser und mit einer axialen Länge aufweist, wobei der Außendurchmesser größer ist als die Länge des magnetisch aktiven Teils. Die axiale Länge des magnetisch aktiven Teils des Rotors ist die sogenannte Eisenlänge des Rotors. Sie ergibt sich aus dem äußeren axialen Abstand zwischen zwei Polradhälften mit dazwischen liegendem Kern, der von einer Ringspule umfasst ist.

Mit Vorteil ist mindestens ein Radiallüfter vorgesehen, der an einer axialen Stirnfläche des Rotors montiert ist, wobei der Radiallüfter einen überwiegend radialen Luftstrom erzeugt, der auf einen Teil der zwei Wickelköpfe bildenden Wickelkopfverbindungen der Wicklungen gerichtet ist. Durch diesen Luftstrom wird der Stator über die relativ große Oberfläche des Wickelkopfs gekühlt.

Der Rotor weist klauenförmige Magnetpole auf, die sich vom Polrad axial nach innen erstrecken. Die klauenartig ausgebildeten Polfinger (Klauenfinger) greifen wechselseitig als Süd- und Nordpole ineinander und überdecken die ringspulenförmige Erregerwicklung, die sich auf dem Polkern befindet.

Nach einer Weiterbildung der Erfindung ist vorgesehen, dass je zwei benachbarte, ineinander greifende Klauenfinger unterschiedlicher Polarität einen axialen Abstand ihrer Klauenfingerspitzen aufweisen, wobei der axiale Abstand der Klauenfingerspitzen zwischen dem 0,7-fachen und dem 1,0-fachen der axialen Kernkörperlänge liegt.

Weiterhin ist vorgesehen, dass die Klauenfinger an ihren hinsichtlich der Umlaufrichtung auflaufenden Kanten und/oder ablaufenden Kanten eine Anfasung aufweisen. Durch eine entsprechend gewählte Anfasung an den Kanten kann das Magnetgeräusch der elektrischen Maschine weiter verringert werden.

Weiterhin ist vorgesehen, dass der Rotor in Klauenpolbauweise mit zwei Polradhälften aufgebaut ist, und einen axial zwischen den Polradhälften liegenden Kern aufweist, wobei die im Wesentlichen trapezförmig ausgebildeten Klauen Polflächen aufweisen, die der Ständerbohrung gegenüberstehen.

Nach einer Weiterbildung der Erfindung ist vorgesehen, dass zwischen den Klauenfingern Permanentmagnete zur Streuflusskompensation angeordnet sind. Die Permanentmagnete dienen dazu, den Streufluss zwischen zwei benachbarten Polfingern, unterschiedlicher magnetischer Polarität, zu verringern, beziehungsweise sogar den Hauptfluss des Magnetkreises zu erhöhen.

Weiterhin ist vorgesehen, dass der Kernkörper eine axiale Kernkörperlänge und die Permanentmagnete eine einheitliche axiale Magnetlänge aufweisen, wobei die axiale Magnetlänge zwischen dem 0,6-fachen und dem 1,2-fachen der axialen Kernkörperlänge liegt.

Insbesondere ist ein Gleichrichter in Brückenschaltung vorgesehen, mit der die Wicklungen verbunden sind. Die Wicklungen können dabei in unterschiedlicher Weise verschaltet sein.

Weiterhin ist vorgesehen, dass die Brückenschaltung zehn Diodenelemente umfasst. Bei einer als Generator ausgebildeten mehrphasigen Maschine ist die Brückenschaltung insbesondere ein 10-pulsiger Brückengleichrichter für eine 5-phasige Maschine, die zehn Diodenelemente aufweist. Insbesondere ist vorgesehen, dass die Wicklungen der Wicklungsanordnung in weniger als zehn elektrischen Verschaltungspunkten mit der Brückenschaltung verbunden sind. Eine Verschaltung in zwei separate Systeme, wie bei der zwei mal dreiphasigen Schaltung entfällt.

Mit Vorteil ist vorgesehen, dass die Wicklungen in einer Pentagrammanordnung verschaltet sind. Das bedeutet, dass die Wicklungen so miteinander verbunden sind, dass sie entsprechend einem Pentagramm (Drudenfuß/fünfzackiger Stern) angeordnet sind. Dabei ergeben sich bei fünf Phasen fünf Verschaltungspunkte. Bei der Verschaltung der Wicklungen entsprechend einem Pentagramm entspricht der Phasenwinkel α der direkt miteinander verschalteten Wicklungen etwa 36° beziehungsweise genau 36°.

Alternativ ist vorgesehen, dass die Wicklungen in einer gesehnten Sternanordnung verschaltet sind, wobei jede der Wicklungen aus zwei zueinander gesehnten Wicklungsteilen besteht. Die gesehnte Sternanordnung weist fünf Verschaltungspunkte, sowie einen gemeinsamen Sternpunkt auf. Die unmittelbar mit dem Sternpunkt verschalteten Wicklungsteile sind nacheinander um elektrisch 72° versetzt verschaltet. Zwischen jedem der Verschaltungspunkte und dem Sternpunkt sind zwei in Serie geschaltete Wicklungsteile so in dem Kernkörper angeordnet, dass die phasenversetzten Wicklungsteile durch ein in Umfangsrichtung versetztes Einliegen in den Nuten einen Phasenwinkel α' von etwa beziehungsweise genau 36° gegeneinander aufweisen.

Weitere Vorteile ergeben sich aus den Unteransprüchen.

Die Erfindung betrifft weiterhin ein Verfahren zur Herstellung einer mehrphasigen elektrischen Maschine, insbesondere einer vorstehend genannten elektrischen Maschine, mit einem Stator, der einen eine umfängliche Nutteilung aufweisenden Kernkörper aufweist. Es ist vorgesehen, dass die Phasenanzahl fünf ist und zur Erstellung des Stators eine Anzahl von Wicklungen entsprechend der Phasenanzahl oder einem Vielfachen der Phasenanzahl sequentiell in den Kernkörper montiert werden, wobei die Wicklungen in zugeordneten Nuten einliegende Wicklungsabschnitte aufweisen, zwischen denen jeweils eine Wickelkopfverbindung ausgebildet ist und die Wickelkopfverbindungen der einzelnen Wicklungen radial lagenweise zueinander geschichtet werden. Anschließend wird der Stator in den Maschinenkörper eingesetzt. Bei einem derartigen Verfahren werden die Wicklungen und/oder der Stator so vorgefertigt, dass ein einfaches und effektives Einbringen der Wicklungen möglich ist. Um ein möglichst geringes Magnetgeräusch zu erhalten, ist die Phasenanzahl fünf, wobei die Anzahl der einzulegenden Wicklungen fünf oder ein Vielfaches von fünf ist. Insbesondere ist vorgesehen, dass das Fügen der Wicklungen nacheinander erfolgt. Die Anzahl der Fügevorgänge entspricht der Phasenanzahl oder einem Vielfachen davon. Dadurch werden aufeinander folgende Radiallagen erzielt. Die Anzahl der einzeln zu montierenden Wicklungen entspricht der Phasenanzahl oder einem Vielfachen der Phasenanzahl, weshalb die Anzahl der Radiallagen ebenfalls der Phasenanzahl oder einem Vielfachen davon entspricht. In zweckmäßiger Ausgestaltung der Erfindung werden die im Wickelkopf radial direkt benachbarten Wicklungen um eine vorgegebene Anzahl von Nutteilungen, dem sogenannten Nutversatz, zueinander versetzt in den Kernkörper montiert.

Mit Vorteil ist vorgesehen, dass die Anzahl der Radiallagen der Phasenanzahl entspricht.

Weiterhin ist vorgesehen, dass die Wicklungen einfache Wicklungen sind. Bei einer einfachen Wicklung verlaufen die sich den Wicklungsabschnitten anschließenden Wickelkopfverbindungen nach dem axialen Austreten aus der Nut in eine Umfangsrichtung, beziehungsweise im Wesentlichen in eine Umfangsrichtung.

Hierzu ist insbesondere vorgesehen, dass der Nutversatz 5*m+4 Nuten beträgt, wobei m ganzzahlig größer oder gleich 0 ist. Damit ist der Wickelkopf in seiner Form gleichmäßiger und das Strömungsgeräusch ist verringert.

Alternativ ist vorgesehen, dass die Wicklungen verteilte Wicklungen sind. Bei einer verteilten Wicklung verlaufen die sich den Wicklungsabschnitten anschließenden Wickelkopfverbindungen nach dem axialen Austreten aus der Nut im Wesentlichen gleich verteilt in beide Umfangsrichtungen.

Hierzu ist vorteilhafterweise vorgesehen, dass der Nutversatz 5*m+1 Nuten beträgt, wobei m ganzzahlig größer oder gleich 0 ist.

Mit Vorteil ist vorgesehen, dass die Wicklungen als Schleifenwicklungen oder als Wellenwicklungen ausgebildet sind.

In zweckmäßiger Ausgestaltung der Erfindung umfasst die Erstellung des Stators folgende Schritte:
- lagenweises Einlegen der Wicklungen in ein ebenes, zwei Statorblechpaketenden aufweisendes Statorblechpaket,
- Rundbiegen des Statorblechpakets mit einliegenden Wicklungen und
- stoffschlüssiges Verbinden der beiden Statorblechpaketenden, wobei ein zylindrischer Kernkörper des Stators entsteht.

Durch das sequenzielle Einlegen der Wicklungen in ein ebenes Statorblechpaket wird der Montagevorgang vereinfacht und Beschädigungen der die Wicklungen bildenden Drähte vermieden. Durch das anschließende Rundbiegen des Statorblechpakets mit eingelegten Wicklungen entsteht ein Kernkörper des Stators, der insbesondere eine hohle zylinderförmige Gestalt aufweist. Der so entstandene Kernkörper kann anschließend komplett vormontiert in den Maschinenkörper eingesetzt werden.

Des Weiteren ist vorgesehen, dass die Wickelkopfverbindungen Wickelköpfe bilden, die vor dem Einlegen der Wicklungen in das ebene Statorpaket verprägt werden und durch das Verprägen eine vorgegebene Form annehmen, wobei die radiale Gesamthöhe aller zueinander geschichteten Wicklungen in etwa der Nuttiefe entspricht. Dabei ergibt sich insbesondere bei der Ausbildung von ebenen Wicklungen zum Einlegen in ein ebenes Statorblechpaket, dass die die Wickelkopfverbindungen Wickelköpfe bilden, von denen die Wickelkopfverbindungen mindestens einer Wicklung verprägt werden. Dabei sind die Wickelkopfverbindungen radial lagenweise angeordnet.

Weiterhin ist vorgesehen, dass die Wicklungsabschnitte der Wicklungen vor dem Einlegen der Wicklungen in das ebene Statorpaket verprägt werden und durch das Verprägen eine vorgegebene Form annehmen, wobei sich diese an den Nutquerschnitt anpasst.

In Weiterbildung der Erfindung ist ferner vorgesehen, dass alternativ das Verfahren zur Erstellung des Stators folgende Schritte umfasst:
- Vorfertigen der Wicklungen aus mindestens einem durchgehenden Wickeldraht in eine Form von im Wesentlichen ebenen ringförmigen Wicklungseinheiten,
- Verformen von ringförmigen Wicklungseinheiten in sternförmige Wicklungseinheiten mit Wicklungsabschnitten, zwischen denen jeweils eine Wickelkopfverbindung ausgebildet ist und
- aufeinander folgendes Montieren der im Wickelkopf radial direkt benachbarten Wicklungen um eine vorgegebene Anzahl von Nutteilungen zueinander versetzt in die Nuten eines zylindrischen Kernkörpers.

Die sternförmigen Wicklungseinheiten weisen dabei geraden Wicklungsabschnitte auf, die in dieser Fertigungsstufe in radialer Richtung verlaufen und später in axialer Richtung in den Nuten einliegen. Zwischen den geraden Wicklungsabschnitten liegen jeweils in Umfangsrichtung verlaufende Wicklungsteile, die später die Wickelkopfverbindungen bilden. Die vorgegebene Anzahl von Nutteilungen entspricht dem sogenannten Nutversatz.

Dabei ist vorzugsweise vorgesehen, dass die sternförmigen Wicklungseinheiten in zwei Hälften aufgeteilt und um eine Polteilung gegeneinander verdreht werden, wobei Wicklungseinheiten für verteilte Wicklungen entstehen. Bei einer verteilten Wicklung verlaufen die sich den Wicklungsabschnitten anschließenden Wickelkopfverbindungen nach dem axialen Austreten aus der Nut im Wesentlichen gleich verteilt in beide Umfangsrichtungen. Dabei werden anfänglich ringförmige, in Sternform umgeformte Wicklungseinheiten in zwei Hälften aufgeteilt, um eine Polteilung gegeneinander verdreht, wodurch Wicklungseinheiten für verteilte Wicklungen entstehen. Die derart vorgefertigten Wicklungen lassen sich maschinell herstellen und maschinell in den Kernkörper einbringen, was besonders effektiv und effizient ist.

### Kurze Beschreibung der Zeichnungen

Die Erfindung wird nachfolgend in mehreren Ausführungsbeispielen anhand der zugehörigen Zeichnungen näher erläutert. Die Erfindung ist nicht auf die Ausführungsbeispiele begrenzt. Es zeigen:
- Figur 1: eine Schnittdarstellung einer als Klauenpolgenerator ausgebildeten elektrischen Maschine,
- Figur 2: einen Stator für eine elektrische Maschine mit einer verteilten Wellenwicklung,
- Figur 3: eine Draufsicht auf den Stator der Figur 2,
- Figur 4: eine Draufsicht auf einen Stator mit einfachen Wellenwicklungen,
- Figur 5: ein Schaltbild einer Brückenschaltung eines 5-phasigen Stators in Pentagrammanordnung ,
- Figur 6: ein Schaltbild einer Verschaltung eines 5-phasigen Ständers in einer Anordnung als gesehnter Stern,
- Figur 7: einen Klauenpolrotor mit vorbereiteten Schlitzen zur Magnetbestückung,
- Figur 8: zwei Klauenfinger mit einem Permanentmagneten,
- Figur 9: einen Querschnitt durch einen Bereich eines Kernkörpers mit einer Nut,
- Figur 10: ein Diagramm, bei dem der Generatorstrom über dem Verhältnis der Nutbreite zur Jochhöhe aufgetragen ist,
- Figur 11: ein Diagramm, bei dem der Generatorstrom über dem Verhältnis der Jochhöhe zur Nuttiefe aufgetragen ist,
- Figur 12: eine ringförmige Wicklungseinheit,
- Figur 13: eine sternförmige Wicklungseinheit,
- Figur 14: Herstellungsschritte einer verteilten Wicklung aus anfänglich ringförmiger Wicklungseinheit,
- Figur 15: ein quaderförmiges, ebenes Statorpaket (prinzipiell),
- Figur 16: einen zylindrischen Kernkörper aus einem rundgebogenen, vormals ebenen Statorpaket (prinzipiell),
- Figur 17: einen Wickelkopf mit lagenweise angeordneten Wickelkopfverbindern und
- Figuren 18 bis 26: diverse Darstellungen (prinzipiell) der Ausführungsbeispiele der Wicklungen im Kernkörper.

### Beschreibung der Ausführungsbeispiele

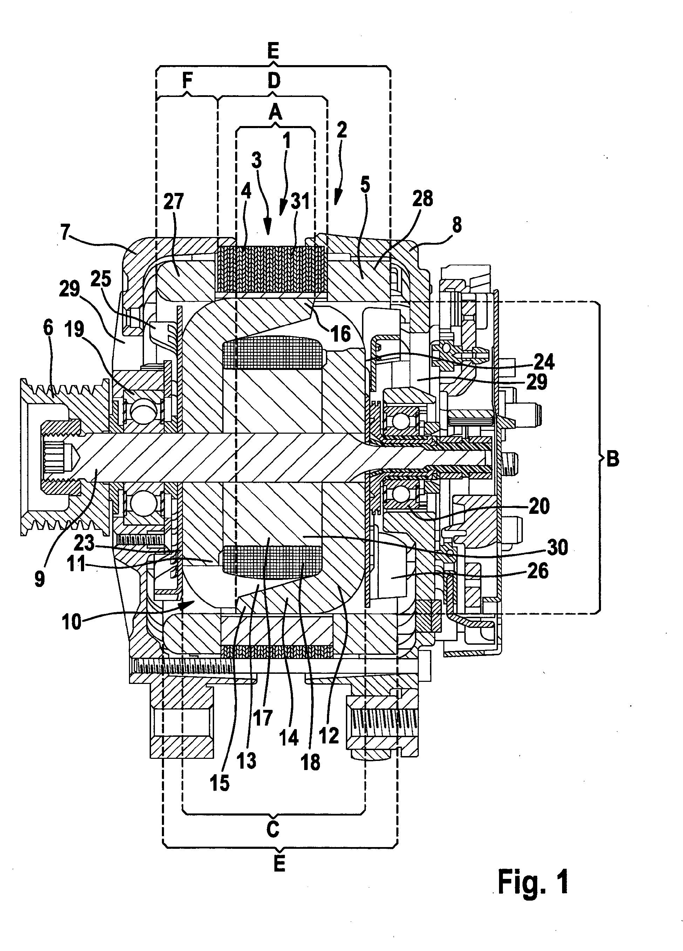

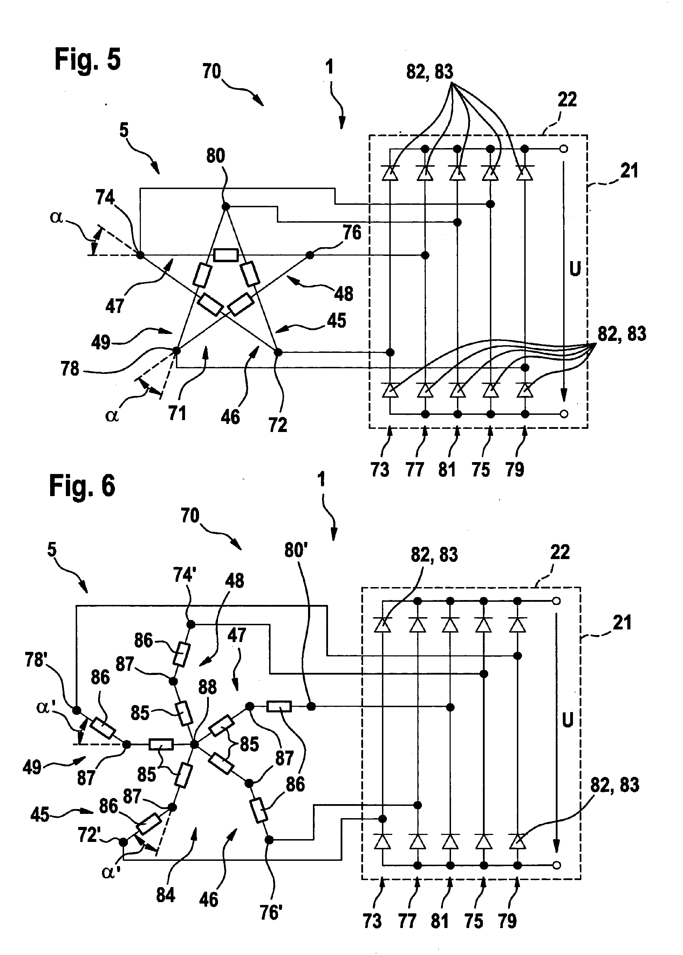

Die Figur 1 zeigt eine als Generator 1 ausgebildete mehrphasige elektrische Maschine 2, wie sie zum Beispiel in Kraftfahrzeugen verwendet wird. Die elektrische Maschine 2 weist einen Stator 3 mit einem Kernkörper 4 und einer Wicklungsanordnung 5 auf. Der Stator 3 wird mittels zweier Lagerschilde, einem der Riemenscheibe 6 zugewandten Antriebslagerschild 7 und einem Schleifringlagerschild 8, getragen. Dabei umgibt der Stator 3 radial einen auf einer Welle 9 angeordneten Rotor 10. Der Rotor 10 weist zwei Klauenpolplatinen auf, an deren Außenumfang sich jeweils in axialer Richtung erstreckende, im Wesentlichen trapezförmig ausgebildete Klauenfinger 13,14 angeordnet sind. Beide Klauenpolplatinen sind im Rotor derart angeordnet, dass ihre sich in axialer Richtung erstreckenden Klauenfinger ineinander greifen und am Umfang des Rotors aneinander als Nord- und Südpole abwechseln. Es ergeben sich dadurch magnetisch erforderliche Klauenpolzwischenräume zwischen den gegensinnig magnetisierten, sich in Umfangsrichtung gegenüberliegenden Klauenfingern. Die Klauenfingerspitzen 15, 16 von sich in Umfangsrichtung gegenüberliegenden Klauenfingern 13, 14 haben einen axialen Abstand A. Der Rotor 10 ist im Wesentlichen zylinderförmig aufgebaut und weist einen Kern 17 auf, der die beiden Klauenpolplatinen auf Abstand hält und der von einer ringförmigen Erregerwicklung 18 umgeben ist. Die Klauenpolplatinen 11, 12 der Kern 17 und die Erregerwicklung 18 bilden einen magnetisch aktiven Teil 30 des Rotors 10 mit einer Länge C. Dabei hat der Rotor.10 einen Außendurchmesser B. Die Welle 9 ist beidseitig in je einem Wälzlager 19, 20 gelagert, die jeweils in einem der beiden Lagerschilde 7, 8 angeordnet sind. Hinter dem Schleifringlagerschild 8 - außerhalb des Lagerschildes - befindet sich in diesem Ausführungsbeispiel eine nicht näher dargestellter 10-pulsige Brückenschaltung 21 und ein die elektromagnetische Erregung des Rotors 10 regelnder elektrischer Feldregler, der die Erregerwicklung 18 kontaktiert, wobei sowohl die 10-pulsige Brückenschaltung, als auch der Feldregler innerhalb des Schleifringlagerschildes angeordnet sein können. Die 10-pulsige Brückenschaltung 21 ist dabei als Brückengleichrichter 22 ausgebildet und ist in den Figuren 5 und 6 als Schaltbild dargestellt. An die Stirnflächen 23, 24 des Rotors 10 schließt sich axial jeweils ein Radiallüfter 25, 26 an. Die Radiallüfter 25, 26 dienen der Kühlung der elektrischen Maschine 2, insbesondere des Stators 3 über seine Wickelköpfe 27, 28. Dazu wird Frischluft axial durch Lufteinlassöffnungen 29 angesaugt, in radiale Richtung umgelenkt und auf mindestens einen Teil der Wickelköpfe 27, 28 gelenkt, sodass sie diese kühlt. Der insbesondere als Statorblechpaket 31 ausgebildete Kernkörper 4 hat eine axiale Kernkörperlänge D. Die Statorlänge E des gesamten Stators 3 ist um die doppelte axiale Wickelkopflänge F größer als die Kernkörperlänge D des Kernkörpers 4.

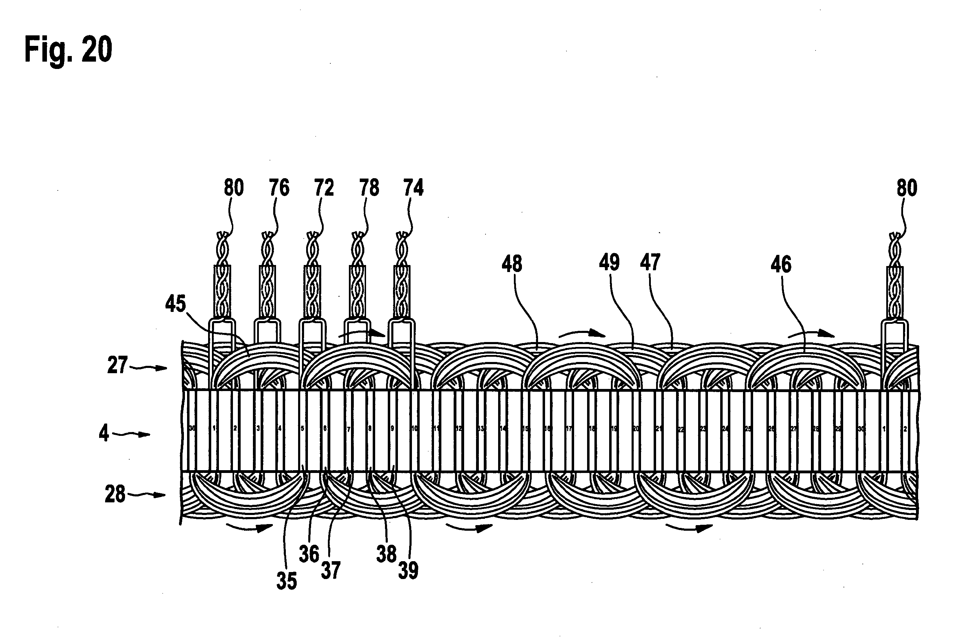

Es ergibt sich folgende Funktion der als Generator 1 ausgebildeten elektrischen Maschine 2: Wird die Welle 9 von einem Antrieb über die Riemenscheibe 6 drehend angetrieben, so rotiert der Rotor 10 und induziert in der Wicklungsanordnung 5 des Stators 3 - bei Stromfluss durch die Erregerwicklung 18 - eine mehrphasige Wechselspannung, die über den Brückengleichrichter 22, in dem eine Wicklungsanordnung 32 des Stators 3 verschaltet ist, gleichgerichtet wird. Alternativ kann die Wicklungsanordnung 32 auch, entsprechend der Darstellung in Figur 20, auf oder in der Nähe eines Wickelkopfes verschaltet sein.

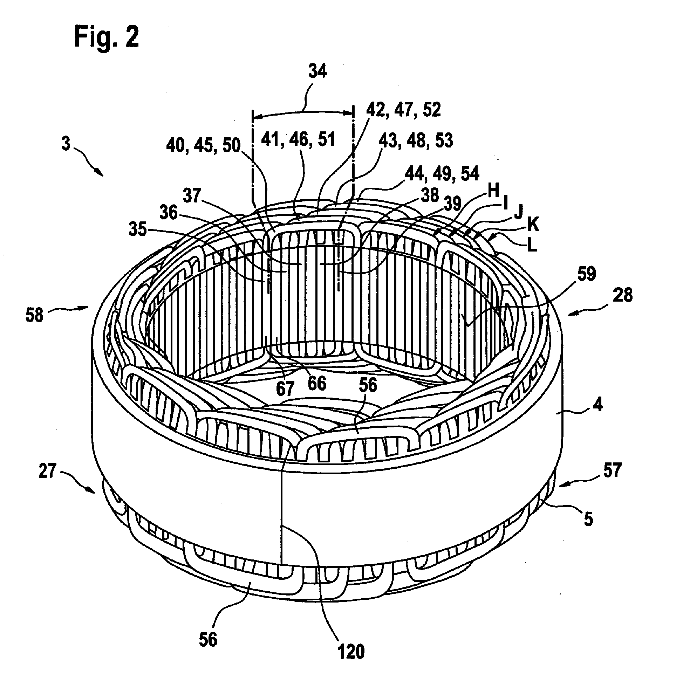

Die Figur 2 zeigt den Stator 3 mit Kernkörper 4. Der Kernkörper 4 weist eine umfängliche Nutteilung auf, die aus zwölf Nutgruppen 34 aufgebaut ist. Jede Nutgruppe 34 erstreckt sich über eine Polteilung und weist 5 Nuten 35, 36, 37, 38, 39 auf. Jede dieser Nuten 35 bis 39 einer Nutgruppe 34 ist einer der fünf Phasen zugeordnet. Insgesamt ergeben sich bei dem in Figur 2 dargestellten Stator 3 also 60 Nuten 35 bis 39 bei fünf Phasen, wobei dieser Stator 3 für einen Rotor 10 mit zwölf magnetischen Polen ausgelegt ist. In dem Kernkörper 4 der Figur 2 sind fünf als verteilte Wicklungen 40, 41, 42, 43, 44 ausgebildete Wicklungen 45, 46, 47, 48, 49 montiert, wobei diese als Wellenwicklungen 50, 51, 52, 53, 54 ausgebildet sind. Jede der Wellenwicklungen 50, 51, 52, 53, 54 ist gleich aufgebaut, jedoch in ihr zugeordneten Nuten 35, 36, 37, 38, 39 eingezogen. Der Aufbau der als dunkel markierten Wellenwicklung 54 ausgebildeten Wicklung 49 soll hier exemplarisch dargestellt werden. Bei einer Wellenwicklung 54 folgt periodisch aufeinander jeweils ein aktiv in einer zugeordneten Nut 39 einliegender Wicklungsabschnitt 55 (aktiver Leiter) auf eine Wickelkopfverbindung 56, sodass eine wellenförmige Wicklung 54 entsteht. Während der Wicklungsabschnitt 55 in einer zugeordneten Nut 39 einliegt, überspannt die Wickelkopfverbindung 56 jeweils einen der sich an das Paket anschließenden Endbereiche 57, 58 bis zur entsprechenden Nut 39 der nächsten Nutgruppe 34. Die periodisch aufeinanderfolgende Abfolge von einem Wicklungsabschnitt 55 und einer Wickelkopfverbindung 56 in Wellenform lässt die Wellenwicklung 54 entstehen. Die Wickelkopfverbindungen 56 sind dabei radial lagenweise angeordnet, sodass jede der Wickelkopfverbindungen 56 und jeder der Wicklungsabschnitte 55 einer seiner zugehörigen Wicklung 49 zugeordneten Radiallage H, I, J, K, L in den Kernkörper 4 eingezogen ist. Unter der Radiallage H, I, J, K, L einer Wicklung 45, 46, 47, 48, 49 ist dabei die jeweilige Radiallage dieser Wicklung im Wickelkopf zu verstehen. Die entsprechende Wicklung - zum Beispiel Wicklung 49 - entspricht dann bei entsprechender Schaltung einer Phase, die dieser Radiallage L zugeordnet ist. Die Wickelkopfverbindungen 56 jeder der Wicklungen 45, 46, 47, 48, 49 bildet in beiden Endbereichen 57, 58 des Kernkörpers 4 die Wickelköpfe 27, 28 aus.

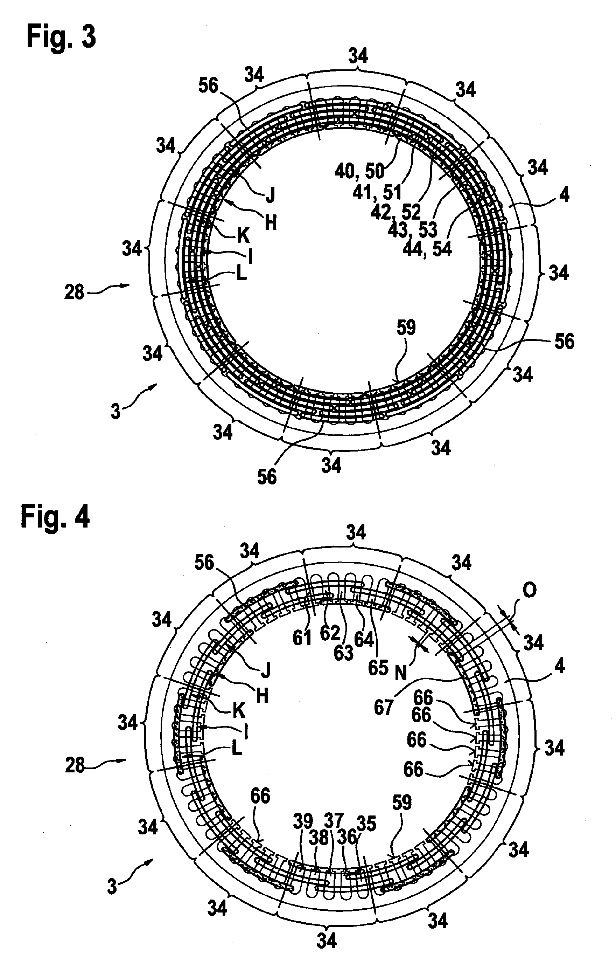

Die Figur 3 zeigt eine Draufsicht auf den Stator 3 der Figur 2.

Die Figur 4 zeigt eine Draufsicht auf einen Stator 3 mit einfachen Wellenwicklungen. Der Kernkörper 4 des Stators 3 weist jeweils zwölf Nutgruppen 34 mit je fünf Nuten 35, 36, 37, 38, 39 auf, die sich von der Innenseite 59 des Kernkörpers 4 radial in diesen hinein erstrecken. Zwischen den Nuten 35, 36, 37, 38, 39 ergeben sich Zähne 61, 62, 63, 64, 65 mit an der radialen Innenseite 59 verbreiterten Zahnoberflächen 66. Diese verbreiterten Zahnoberflächen 66 zweier benachbarter Zähne 61, 62, 63, 64, 65 lassen an der Innenseite 59 jeweils einen verengten Nutschlitz 67 entstehen, dessen Nutschlitzbreite N kleiner ist als die maximale Nutbreite O in Umfangsrichtung der Nuten 35, 36, 37, 38, 39. Die entsprechenden Abmessungen sind in Figur 4 gezeigt. Die Figuren 3 und 4 zeigen jeweils fünf Wellenwicklungen 50, 51, 52, 53, 54 die in fünf verschiedenen Radiallagen H, I, J, K, L der Wickelkopfverbindungen in den Kernkörper 4 montiert sind. Bei der in der Figur 3 dargestellten verteilten Wellenwicklung kommt es zu einer deutlich höheren Füllung der Nuten 35, 36, 37, 38, 39, sodass die Wickelkopfverbindungen 56 der verteilten Wicklungen 40, 41, 42, 43, 44 radial lagenweise angeordnet sind. Dazu liegen jeweils zwei Wicklungsabschnitte 55 einer verteilten Wicklung 40, 41, 42, 43, 44 auf einer Radiallage in einer zugehörigen Nut 35, 36, 37, 38, 39. Bei dem in Figur 4 dargestellten Stator 3 mit einfachen Wellenwicklungen 50, 51, 52, 53, 54 ist die Füllung der einzelnen Nuten 35, 36, 37, 38, 39 geringer, wobei auch hier jeder der Wicklung 40, 41, 42, 43, 44 feste Nuten 35, 36, 37, 38, 39 der Nutgruppen 34 und zugehörige Radiallagen H, I, J, K, L der Wickelkopfverbindungen zugeordnet sind.

Die Figur 5 zeigt eine Verschaltung 70 entsprechend einem Pentagramm (Drudenfuß) 71 der Wicklungsanordnung 5. Die Verschaltung kann in dem Brückengleichrichter 22 oder in der Nähe eines Wickelkopfes 27, 28 angeordnet sein. Dazu ist die Wicklung 45 und die Wicklung 46 im Verschaltungspunkt 72 mit einem Mittelabgriff des ersten Brückenzweigs 73 verschaltet. Die Wicklung 46 ist mit der Wicklung 47 im Verschaltungspunkt 74 und vierten Brückenzweig 75 verschaltet, die Wicklung 47 ist mit der Wicklung 48 im Verschaltungspunkt 76 mit dem zweiten Brückenzweig 77 verschaltet. Die Wicklung 48 ist mit der Wicklung 49 im Verschaltungspunkt 78 mit dem fünften Brückenzweig 79 verschaltet und die Wicklung 49 ist mit der Wicklung 45 im Verschaltungspunkt 80 mit dem dritten Brückenzweig 81 verschaltet. Der Phasenwinkel α zwischen den in den Verschaltungspunkten 72, 74, 76, 78, 80 verschalteten Wicklungen 45, 46, 47, 48, 49 ist exemplarisch in den Verschaltungspunkten 78 und 74 dargestellt. Der Phasenwinkel α beträgt in etwa beziehungsweise genau 36°. Die Brückenzweige 73, 75, 77, 79, 81 weisen jeweils zwei als Gleichrichterdioden 82 ausgebildete Dioden 83 auf.

Die Figur 6 zeigt die Verschaltung der Wicklungsanordnung 5 als gesehnter Stern. Die Verschaltung kann in dem Brückengleichrichter 22 oder in der Nähe eines Wickelkopfes angeordnet sein. Jeweils zwei gegeneinander im Phasenwinkel α' phasenversetzte Teile 85, 86 der Wicklungen 45, 46, 47, 48, 49 im jeweiligen Verschaltungspunkt 87 in Serie verschaltet. Dazu sind die beiden Teile 85, 86 derart gegeneinander versetzt in den Kernkörper 4 eingebracht, dass diese jeweils einen Phasenwinkel α' von jeweils etwa beziehungsweise genau 36° gegeneinander aufweisen. Die Wicklungen 45, 46, 47, 48, 49 sind einerseits in einem gemeinsamen Sternpunkt 88 verschaltet und andererseits in den Verschaltungspunkten 72', 74', 76', 78', 80' und den Brückenzweigen 73, 75, 77, 79, 81 des fünfphasigen Brückengleichrichters 22 verschaltet.

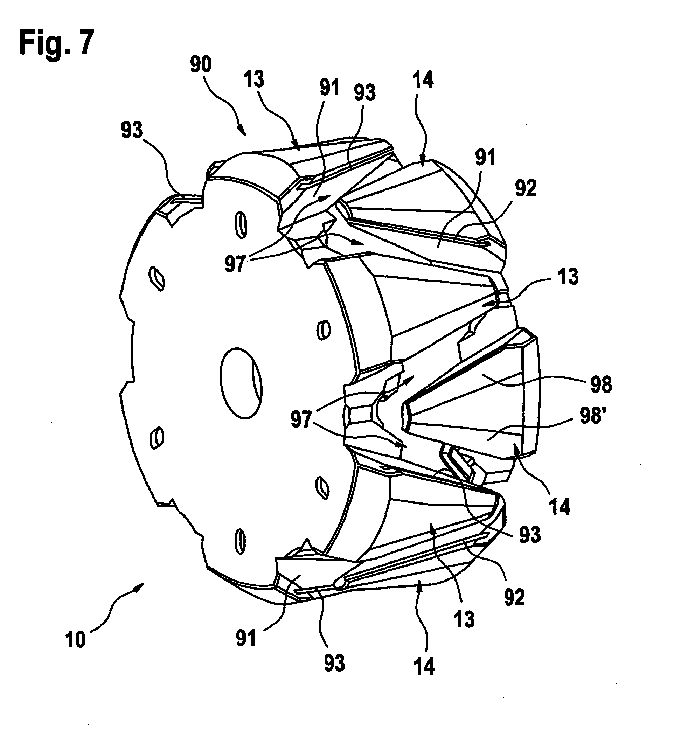

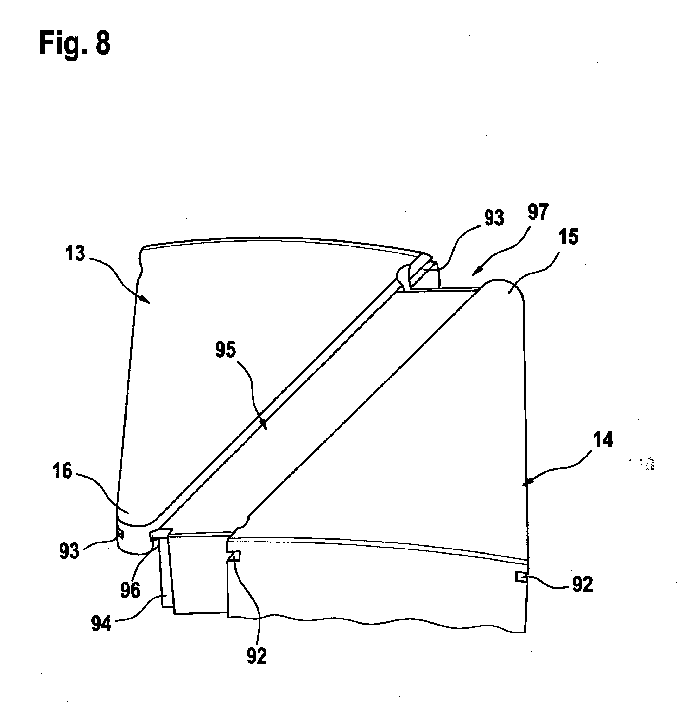

Figur 7 und Figur 8 zeigen in einer dreidimensionalen Darstellung einen Rotor 10 der in Figur 1 dargestellten elektrischen Maschine 2. Die Mantelfläche 90 des Rotors 10 wird von zwei mal sechs Klauenfingern 13, 14 (klauenförmige Pole) gebildet, die umfänglich abwechselnd angeordnet sind. Zwischen jeweils einem Klauenfinger 13 und einem Klauenfinger 14 befindet sich ein Zwischenraum 97, der durch Flanken 91 der Klauenfinger 13, 14 begrenzt ist. In den Flanken 91 befindet sich jeweils eine Polnut 92, 93, die sich über die komplette Länge des Klauenfingers 13, 14 erstreckt. In jeden der Zwischenräume 97 kann ein Permanentmagnet 94 eingebracht werden, der von einem Halteelement 95 zwischen den Klauenfingern 13, 14 gehalten wird. Dazu greift eine leistenförmige Kante 96 des Halteelements 95 beidseitig in die Polnuten 92, 93. Die

Permanentmagnete 94 dienen dabei zur Kompensation des magnetischen Streuflusses zwischen den gegensinnig magnetisierten Klauenfingern 13, 14. Durch die Streuflusskompensation erhöht sich die Leistungsabgabe. Zur Reduzierung des Magnetgeräusches können die Klauenfinger 13,14 auf ihren hinsichtlich der Umlaufrichtung auflaufenden und/oder ablaufenden Kanten angefast werden.

Es kann auch ein Läufer ohne Permanentmagnete verwendet werden, wobei dann entsprechende Maßnahmen zur Befestigung der Magnete, wie z.B. die Polnuten 92, 93 entfallen können.

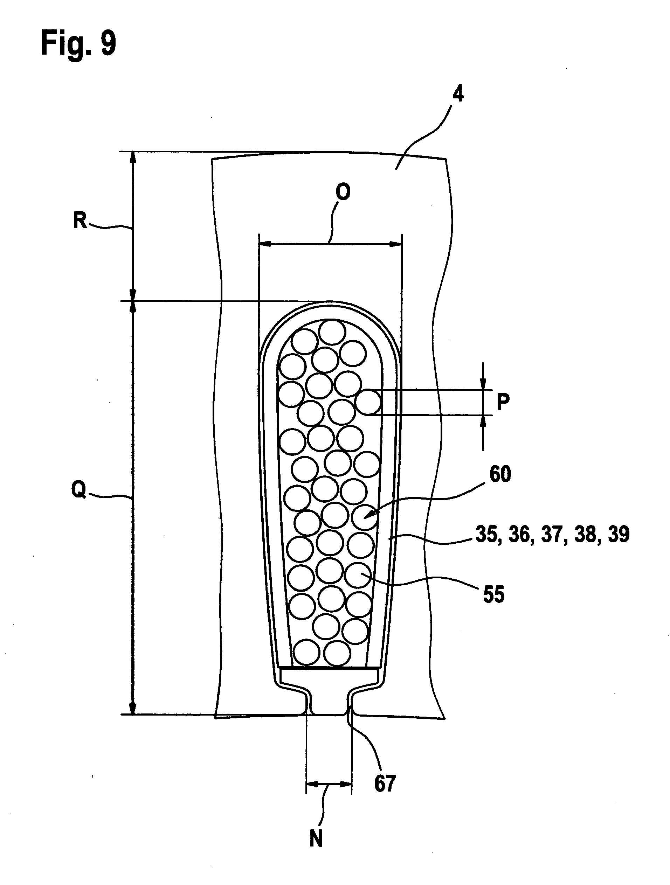

Die Figur 9 zeigt einen Querschnitt durch einen Bereich des Kernkörpers 4 mit einer Nut 35, 36, 37, 38, 39 in der Wicklungsabschnitte 55 aus Wicklungsdraht 60 einliegen. Die Figur 9 veranschaulicht die Größenverhältnisse zwischen der Nutschlitzbreite N, der maximalen Nutbreite O und der Nuttiefe Q der Nut 35, 36, 37,38, 39 der Jochhöhe R, des Kernkörpers 4 und dem Wicklungsdrahtdurchmesser P des Wicklungsdrahtes 60. Die Jochhöhe R ist der radiale Abstand zwischen dem Grund einer Nut im Kernkörper 4 und dem gegenüberliegenden Außendurchmesser des Kernkörpers 4.

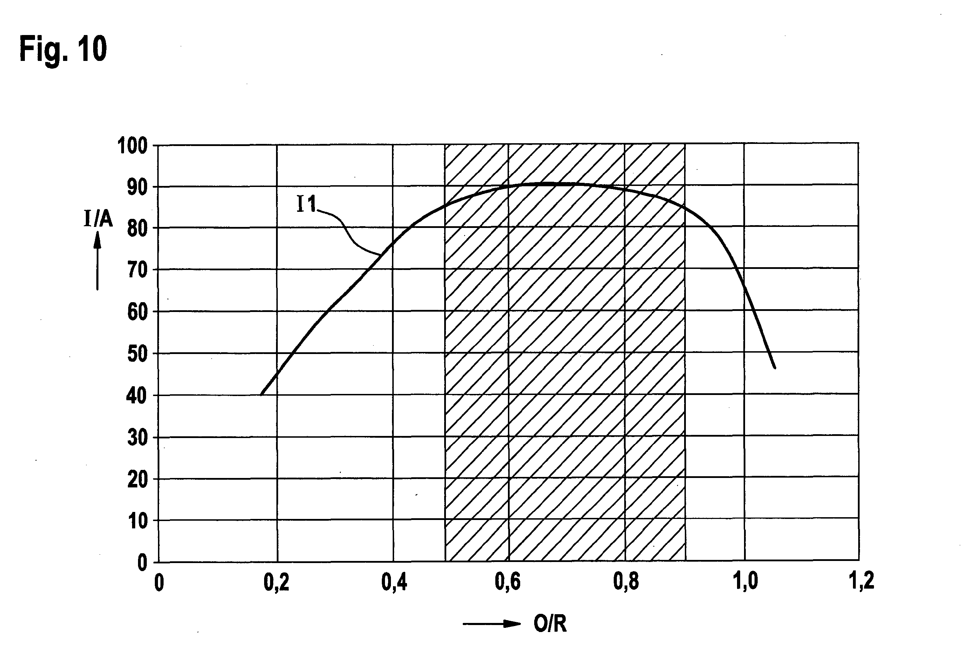

Die Figur 10 zeigt ein Diagramm, bei dem der gleichgerichtete Generatorstrom in Ampere über dem Verhältnis der maximalen Nutbreite O zur Jochhöhe R aufgetragen ist. Dabei zeigt die Generatorstromkennlinie I1 im Bereich 0,5 < O/R < 0,9 einen flachen Verlauf auf hohem Niveau bei bis zu 90 A.

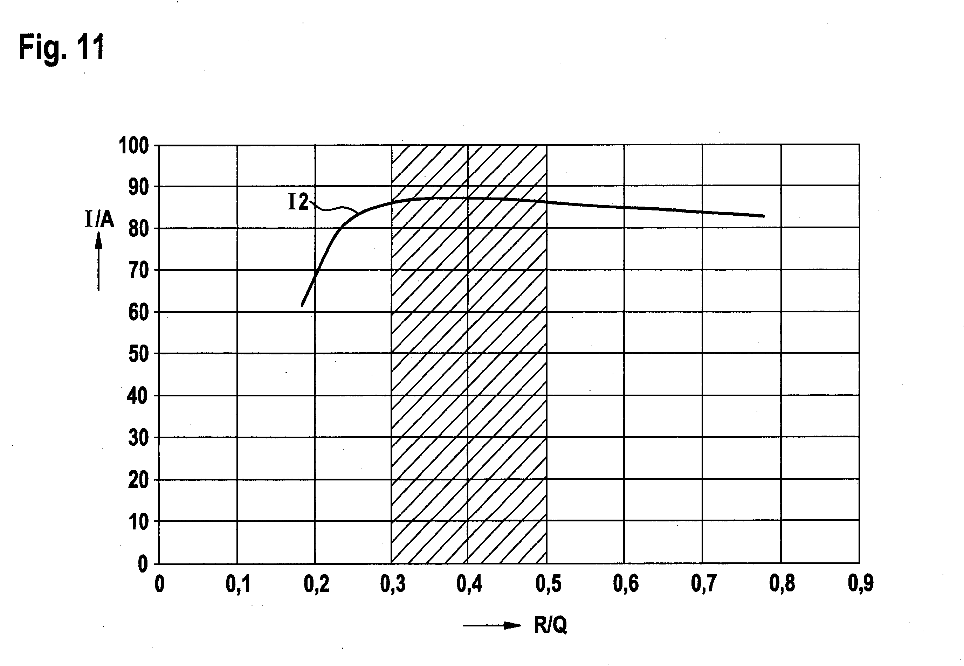

Die Figur 11 zeigt ein Diagramm, bei dem der gleichgerichtete Generatorstrom in Ampere über dem Verhältnis der Jochhöhe R zur Nuttiefe Q aufgetragen ist. Dabei zeigt die Kennlinie I2 im Bereich 0,3 < R/Q < 0,5 einen nahezu konstanten Verlauf bei etwa 85 A.

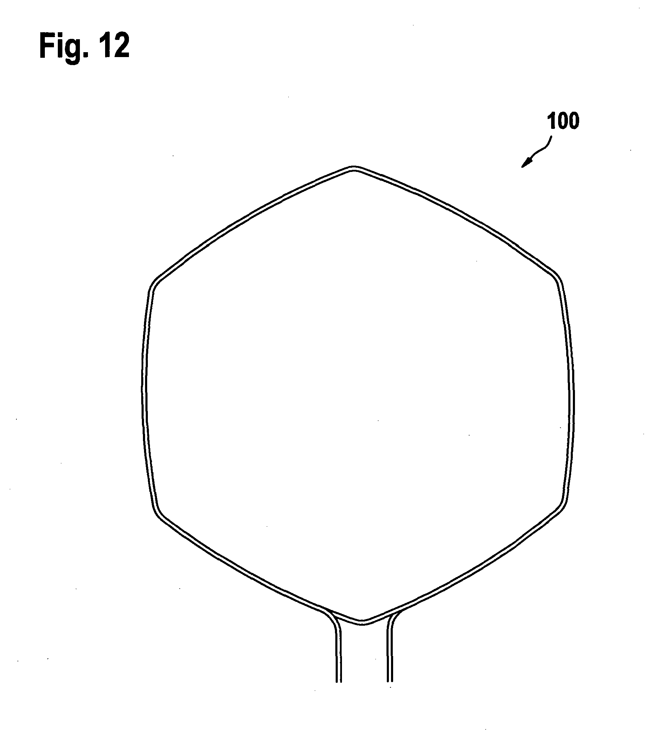

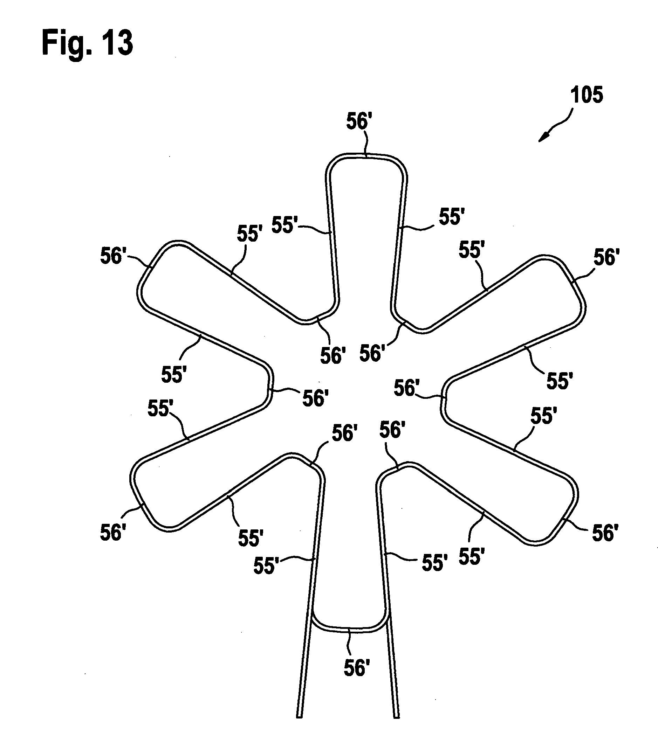

Die Figur 12 zeigt eine annähernd ringförmige und vorwiegend ebene Wicklungseinheit 100 als Vorstufe zur Erstellung der sternförmigen Wicklungseinheit 105, die in Figur 13 dargestellt ist. Die sternförmige Wicklungseinheit 105 weist gerade Wicklungsabschnitte 55' auf, die in dieser Fertigungsstufe in radialer Richtung verlaufen und später in axialer Richtung in den Nuten einliegen. Zwischen den geraden Wicklungsabschnitten 55' liegen jeweils in Umfangsrichtung verlaufende Wicklungsteile 56', die später die Wickelkopfverbindungen 56 bilden.

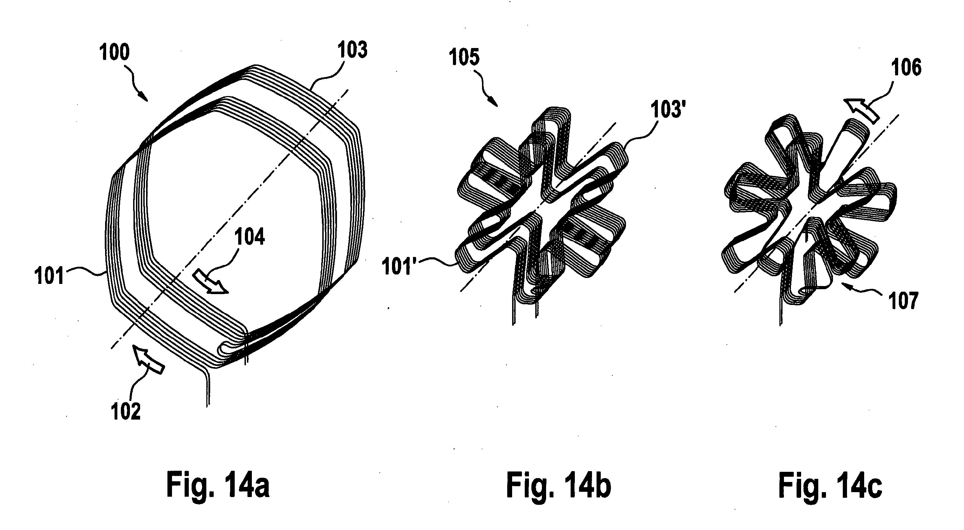

Die Figur 14 zeigt in drei Schritten (Figur 14a - 14c) die Herstellung einer verteilten Wellenwicklung aus ringförmigen Wicklungseinheiten 100. In einer Vorstufe (Figur 14a) werden ringförmige Wicklungseinheiten 100 erstellt, deren erste Hälfte 101 in eine erste Richtung (Pfeil 102) und deren zweite Hälfte 103 in die entgegen gesetzte Richtung (Pfeil 104) gewickelt ist. Aus dieser Vorstufe werden sternförmige Wicklungseinheiten 105 erstellt, siehe auch Figur 14b. Die sternförmigen Wicklungseinheiten 105 werden in zwei Hälften 101 ', 103' aufgeteilt, die aus den Hälften 101, 103 der ringförmigen Wicklungseinheiten 100 gebildet sind. Die Hälften 101', 103' werden anschließend um eine Polteilung in Umfangsrichtung gegeneinander verdreht (Pfeil 106), wobei eine Wicklungseinheit für eine verteilte Wicklung 107 entsteht, siehe auch Figur 14c.

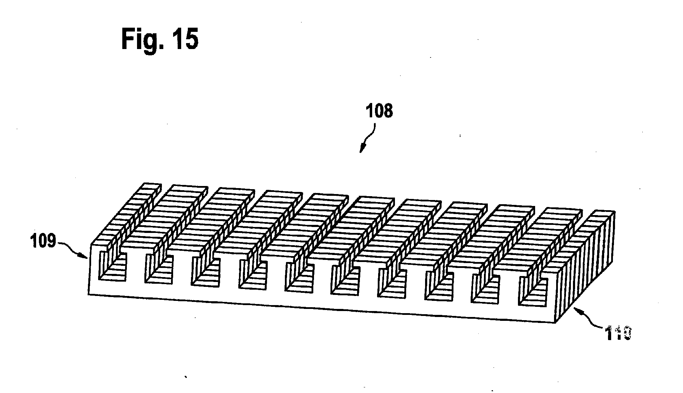

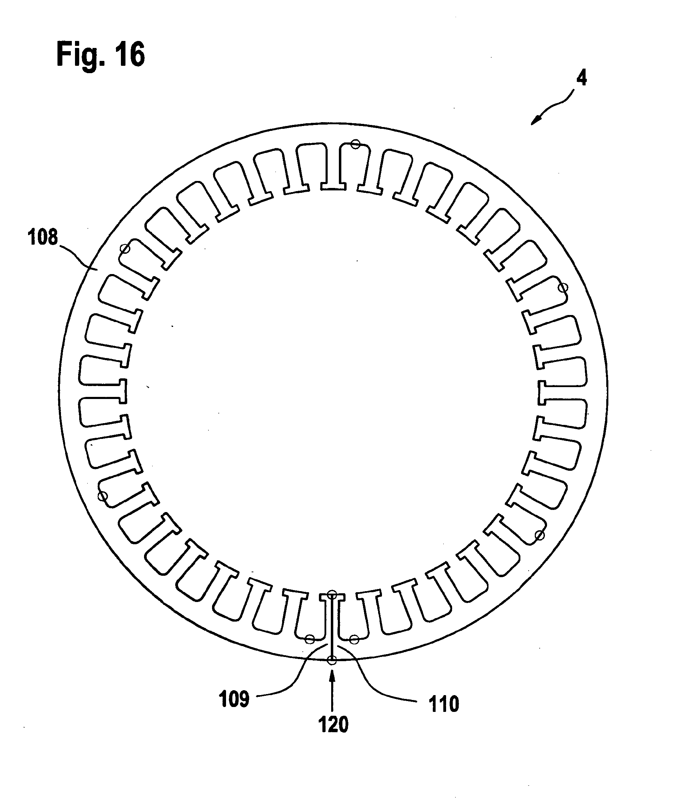

Die Figur 15 zeigt ein Beispiel eines ebenen Statorblechpakets 108, das zwei Statorblechpaketenden 109, 110 aufweist. Durch Rundbiegen des Statorblechpakets 108 und anschließendes Verbinden der beiden Statorblechpaketenden 109, 110 entsteht der in Figur 16 gezeigte Kernkörper 4 mit einer Stoßstelle 120. Bei dem erfindungsgemäßen Verfahren werden die Wicklungen 45, 46, 47, 48, 49 vor dem Rundbiegen in das Statorblechpaket 108 eingebracht, diese sind in Figur 16 nicht dargestellt.

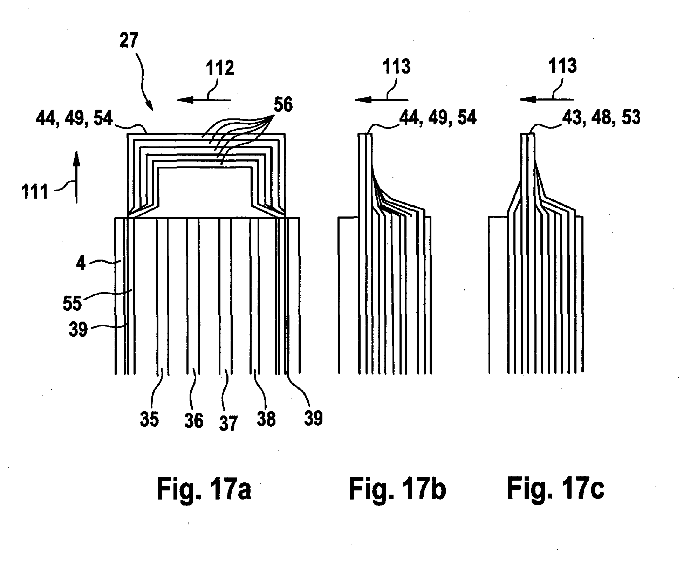

Alle drei Darstellungen der Figur 17 zeigen die Wickelkopfverbindungen 56 einer Phase. Der Pfeil 111 weist in axiale Richtung, der Pfeil 112 weist in Umfangsrichtung und der Pfeil 113 weist in radiale Richtung.

Die Figur 17a zeigt die Wicklungsabschnitte einer erfindungsgemäß ausgeführten Wicklung in der Nut und im Wickelkopf für eine Polteilung. Dargestellt ist der Übergang der Wicklungsabschnitte in die Wickelkopfverbindungen einer Wicklung bei Draufsicht von der Bohrung aus. Die Darstellung der Figur 17b zeigt in einem Längsschnitt den Übergang der Wicklungsabschnitte in der Nut zu den Wickelkopfverbindungen im Wickelkopfbereich, die sich in der radial äußersten Lage befinden.

Die Darstellung der Figur 17c zeigt in einem Längsschnitt den Übergang der Wicklungsabschnitte in der Nut zu den Wickelkopfverbindungen im Wickelkopfbereich, die sich in der radial zweitäußersten Lage befinden.

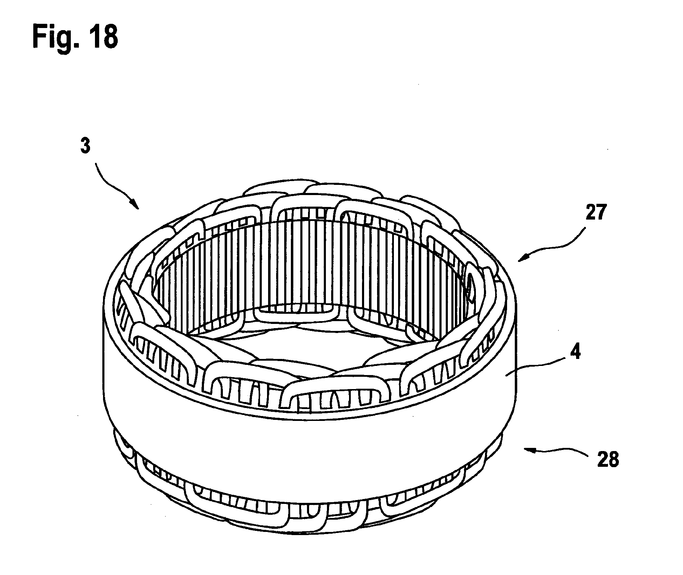

Die Figuren 18 bis 26 zeigen verschiedene, erfindungsgemäße Ausführungsformen und Wickelschemas. Die Figur 18 zeigt einen Stator mit einfacher Wellenwicklung wobei die Wickelkopfverbindungen einer Phase markiert sind.

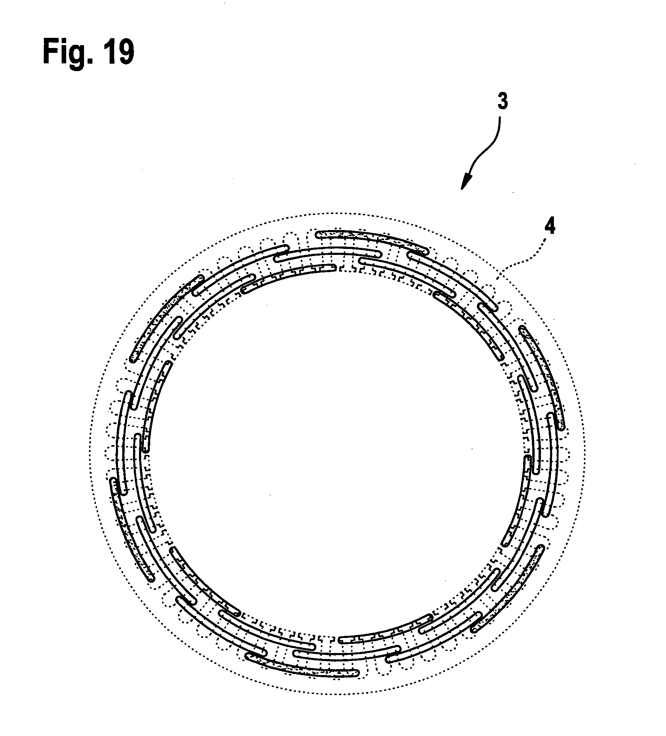

Die Figur 19 zeigt eine Aufsicht auf einen Wickelkopf einer einfachen Wellenwicklung, wobei die Wickelkopfverbindungen einer Phase markiert sind.

Die Figur 20 zeigt eine Aufsicht von der Bohrung aus auf einen in eine Ebene abgewickelten Stator mit sechs Polen und dreißig Nuten 35, 36, 37, 38, 39, wobei jede Phase aus einer einfachen Wellenwicklung 50, 51, 52, 53, 54 besteht, mit entsprechenden Anschlüssen 72, 74, 76, 78, 80 zum Beispiel für die Verschaltung in Drudenfußanordnung in einem Gleichrichter entsprechend Figur 5.

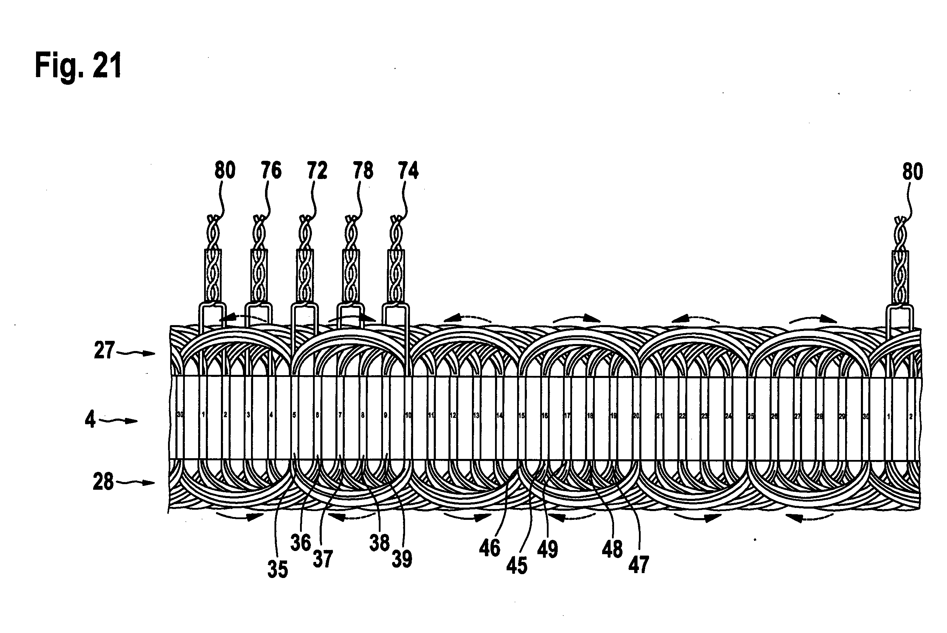

Die Figur 21 zeigt eine Aufsicht von der Bohrung aus auf einen in eine Ebene abgewickelten Stator mit sechs Polen und dreißig Nuten 35, 36, 37, 38, 39 mit einer verteilten Wellenwicklung, mit entsprechenden Anschlüssen 72, 74, 76, 78, 80 zum Beispiel für die Verschaltung in Drudenfußanordnung in einem Gleichrichter entsprechend Figur 5.

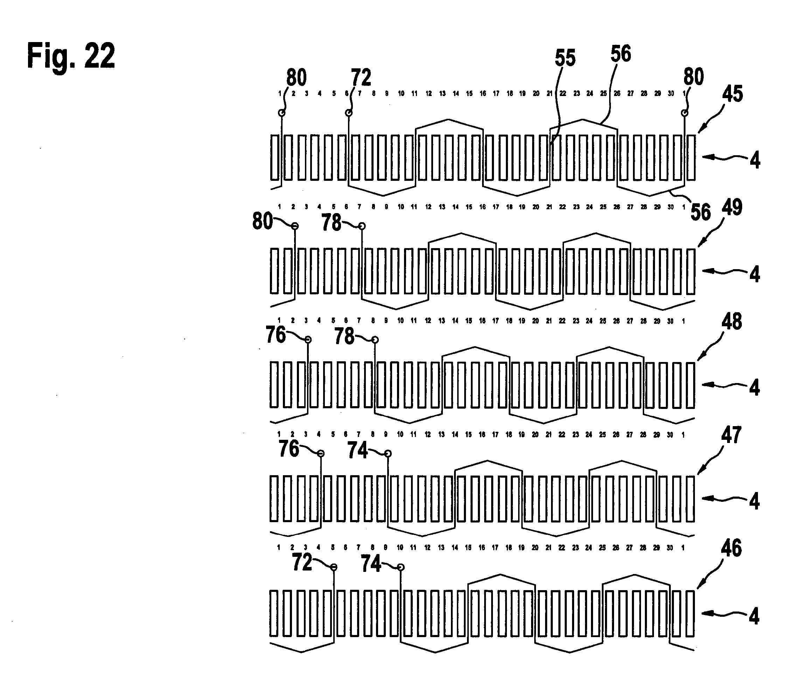

Die Figur 22 zeigt ein Wickelschema für einen Stator mit sechs Polen und dreißig Nuten 35, 36, 37, 38, 39, mit einer einfachen Wellenwicklung, mit entsprechenden Anschlüssen 72, 74, 76, 78, 80 zum Beispiel für die Verschaltung in Drudenfußanordnung in einem Gleichrichter entsprechend Figur 5.

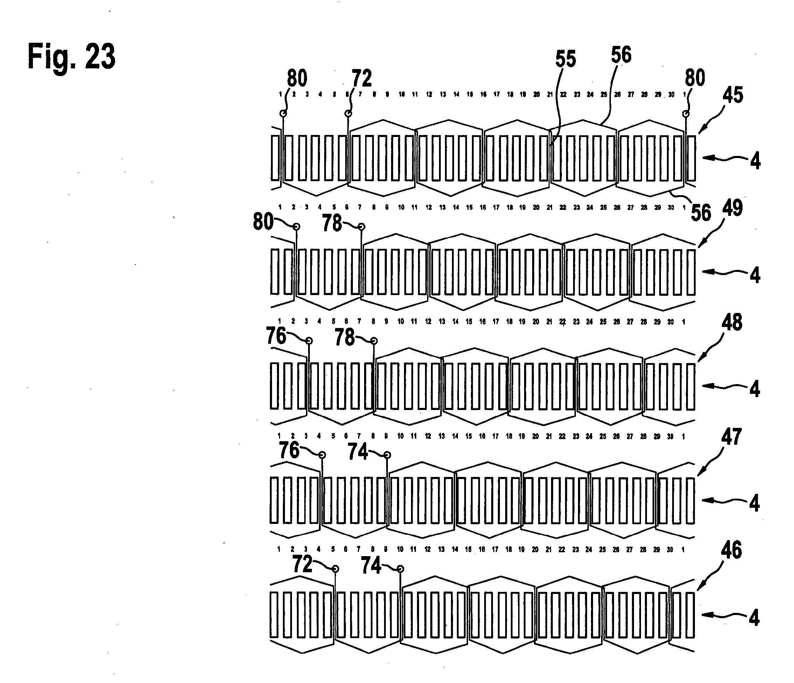

Die Figur 23 zeigt ein Wickelschema für einen Stator mit sechs Polen und dreißig Nuten 35, 36, 37, 38, 39 mit einer verteilten Wellenwicklung, mit entsprechenden Anschlüssen 72, 74, 76, 78, 80 zum Beispiel für die Verschaltung in Drudenfußanordnung in einem Gleichrichter entsprechend Figur 5.

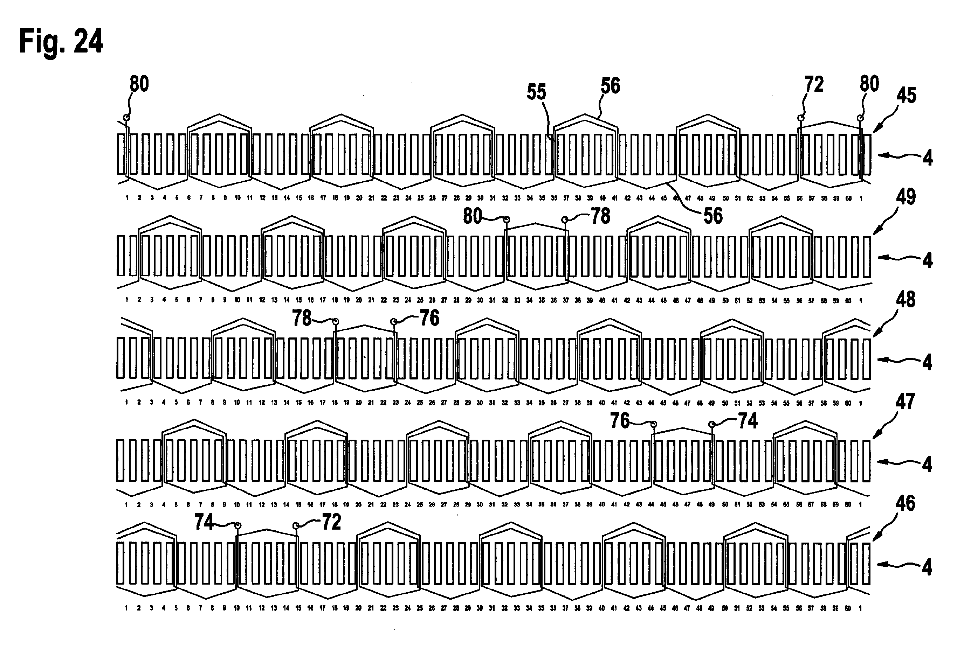

Die Figur 24 zeigt ein Wickelschema für eine einfache Schleifenwicklung für einen Stator mit zwölf Polen und sechzig Nuten 35, 36, 37, 38, 39, mit entsprechenden Anschlüssen 72, 74, 76, 78, 80 zum Beispiel für die Verschaltung in Drudenfußanordnung in einem Gleichrichter entsprechend Figur 5.

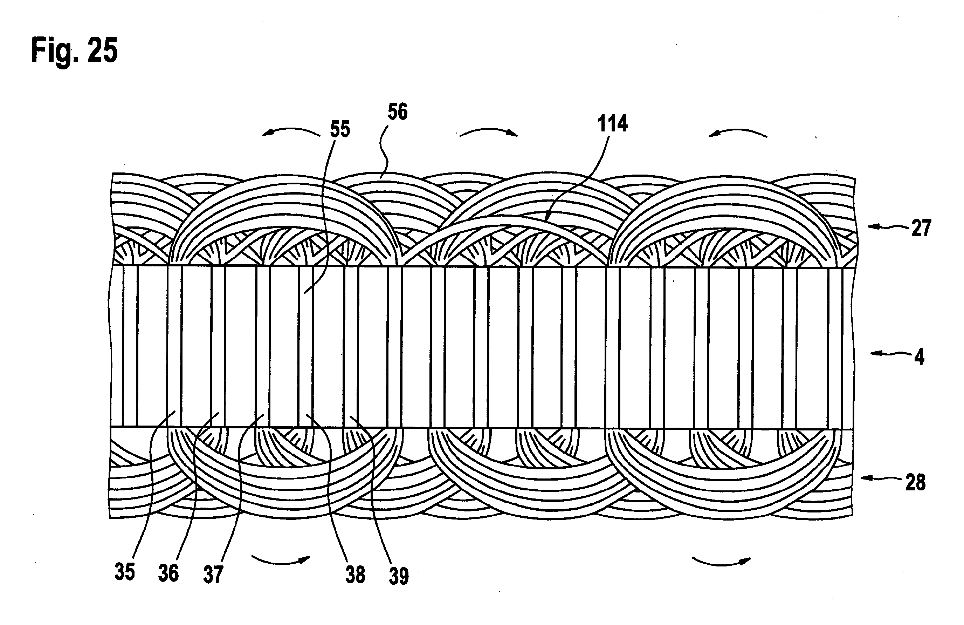

Die Figur 25 zeigt eine Aufsicht von der Bohrung aus auf einen Teil eines in eine Ebene abgewickelten Stators mit einer einfachen Schleifenwicklung, wobei die radial innerste Phase markiert ist. Zwischen den Wickelkopfverbindungen 56 ist jeweils ein Schleifenverbinder 114 angeordnet.

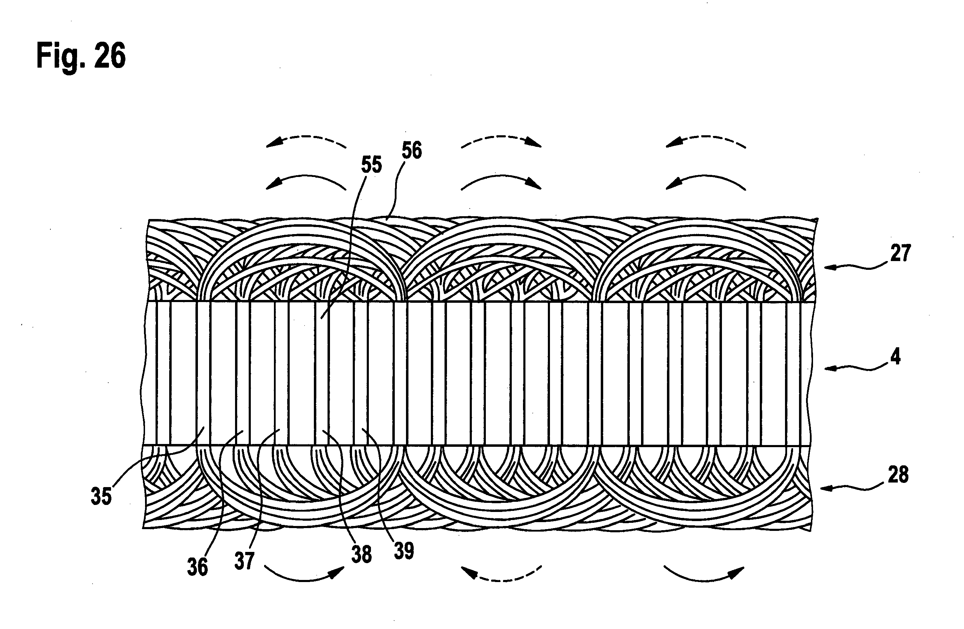

Die Figur 26 zeigt schließlich eine Aufsicht von der Bohrung aus auf einen Teil eines in eine Ebene abgewickelten Stators mit verteilter Schleifenwicklung, wobei die radiale innerste Phase markiert ist.

## Patentansprüche

1. Mehrphasige elektrische Maschine, insbesondere mehrphasiger Generator (1), mit einem Stator (3), der einen eine umfängliche Nutteilung aufweisenden Kernkörper (4) und eine Wicklungsanordnung (5) mit mehreren, Phasen bildenden Wicklungen (45, 46, 47, 48, 49) aufweist und die Phasenanzahl fünf ist, wobei jede Wicklung (45, 46, 47, 48, 49) und jede Nut (35, 36, 37, 38, 39) einer sich über eine Polteilung erstreckenden Nutgruppe, einer der Phasen zugeordnet ist und die Wicklungen (45, 46, 47, 48, 49) in zugeordneten Nuten (35, 36, 37, 38, 39) einliegende Wicklungsabschnitte (55) aufweisen, zwischen denen jeweils eine Wickelkopfverbindung (56) ausgebildet ist, **dadurch gekennzeichnet, dass** die Wickelkopfverbindungen (56) unterschiedlicher Wicklungen (45, 46, 47, 48, 49) radial lagenweise zueinander angeordnet sind.

2. Mehrphasige elektrische Maschine nach Anspruch 1, **dadurch gekennzeichnet, dass** die jeweiligen Wickelkopfverbindungen (56) einer Wicklung (45, 46, 47, 48, 49) in einer einheitlichen Radiallage (H, I, J, K, L) angeordnet sind.

3. Mehrphasige elektrische Maschine nach einem der vorhergehenden Ansprüche, **dadurch gekennzeichnet, dass** die Anzahl der Nuten (35, 36, 37, 38) einem Vielfachen der Phasenanzahl entspricht.

4. Mehrphasige elektrische Maschine nach einem der vorhergehenden Ansprüche, **dadurch gekennzeichnet, dass** die Anzahl der Radiallagen (H, I, J, K, L) der Phasenanzahl oder einem Vielfachen der Phasenanzahl entspricht.

5. Mehrphasige elektrische Maschine nach einem der vorhergehenden Ansprüche, **dadurch gekennzeichnet, dass** die Wicklungen (40, 41, 42, 43, 44) einfache Wicklungen oder verteilte Wicklungen (45, 46, 47, 48, 49) sind.

6. Mehrphasige elektrische Maschine nach einem der vorhergehenden Ansprüche, **dadurch gekennzeichnet, dass** die Wicklungen (40, 41, 42, 43, 44) als Schleifenwicklungen oder als Wellenwicklungen (50, 51, 52, 53, 54) ausgebildet sind.

7. Mehrphasige elektrische Maschine nach einem der vorhergehenden Ansprüche, **dadurch gekennzeichnet, dass** jede der Nuten (35, 36, 37, 38, 39) eine maximale Nutbreite (O) aufweist, die größer ist als der zweifache Durchmesser (P) eines Wicklungsdrahtes (60), aus dem die Wicklungen (45, 46, 47, 48, 49) gewickelt sind.

8. Mehrphasige elektrische Maschine nach einem der vorhergehenden Ansprüche, **dadurch gekennzeichnet, dass** jede der Nuten (35, 36, 37, 38, 39) an ihrem radial inneren Ende einen Nutschlitz (67) aufweist, dessen Nutschlitzbreite (N) kleiner als der zweifache Durchmesser (P) des Wicklungsdrahtes (60) ist.

9. Mehrphasige elektrische Maschine nach einem der vorhergehenden Ansprüche, **dadurch gekennzeichnet, dass** die maximale Nutbreite (O) kleiner ist als eine Jochhöhe (R) des als Statorblechpaket ausgebildeten Kernkörpers (4).

10. Mehrphasige elektrische Maschine nach einem der vorhergehenden Ansprüche, **dadurch gekennzeichnet, dass** das Verhältnis der maximalen Nutbreite (O) zur Jochhöhe (R) des Statorblechpaketes im Bereich zwischen 0,5 und 0,9 liegt.

11. Mehrphasige elektrische Maschine nach einem der vorhergehenden Ansprüche, **dadurch gekennzeichnet, dass** jede der Nuten (35, 36, 37, 38, 39) eine Nuttiefe (Q) aufweist, wobei das Verhältnis der Jochhöhe (R) zur Nuttiefe (Q) im Bereich zwischen 0,3 und 0,5 liegt.

12. Mehrphasige elektrische Maschine nach einem der vorhergehenden Ansprüche, **gekennzeichnet durch** einen Rotor (10) mit einer Polzahl, die multipliziert mit der Phasenanzahl die Anzahl der Nuten (35, 36, 37, 38, 39) ergibt.

13. Mehrphasige elektrische Maschine nach einem der vorhergehenden Ansprüche, **dadurch gekennzeichnet, dass** der Rotor einen magnetisch aktiven Teil (30) mit einem Außendurchmesser (B) und mit einer axialen Länge (C) aufweist, wobei der Außendurchmesser (B) größer ist als die Länge (C) des magnetisch aktiven Teils (30).

14. Mehrphasige elektrische Maschine nach einem der vorhergehenden Ansprüche, **dadurch gekennzeichnet, dass** der Rotor (10) in Klauenpolbauweise mit zwei Polradhälften aufgebaut ist und einen axial zwischen den Polradhälften liegenden Kern aufweist, wobei die im Wesentlichen trapezförmig ausgebildeten Klauen Polflächen aufweisen, die der Ständerbohrung gegenüberstehen.

15. Mehrphasige elektrische Maschine nach einem der vorhergehenden Ansprüche, **dadurch gekennzeichnet, dass** zwischen den Klauenfingern (13, 14) Permanentmagnete (94) zur Streuflusskompensation angeordnet sind.

16. Mehrphasige elektrische Maschine nach einem der vorhergehenden Ansprüche, **dadurch gekennzeichnet, dass** der Kernkörper (4) eine axiale Kernkörperlänge (D) und die Permanentmagnete (94) eine im Wesentlichen einheitliche axiale Magnetlänge (M) aufweisen, wobei die axiale Magnetlänge (M) zwischen dem 0,6-fachen und dem 1,2-fachen der axialen Kernkörperlänge (D) liegt.

17. Mehrphasige elektrische Maschine nach einem der vorhergehenden Ansprüche, **gekennzeichnet durch** einen Gleichrichter in Brückenschaltung (21) mit der die Wicklungen (45, 46, 47, 48, 49) verbunden sind.

18. Mehrphasige elektrische Maschine nach einem der vorhergehenden Ansprüche, **dadurch gekennzeichnet, dass** die Brückenschaltung zehn Diodenelemente umfasst.

19. Mehrphasige elektrische Maschine nach einem der vorhergehenden Ansprüche, **dadurch gekennzeichnet, dass** die Wicklungen (45, 46, 47, 48, 49) in einer Pentagrammanordnung (71) verschaltet sind.

20. Mehrphasige elektrische Maschine nach einem der vorhergehenden Ansprüche, **dadurch gekennzeichnet, dass** die Wicklungen (45, 46, 47, 48, 49) in einer gesehnten Sternanordnung (84) verschaltet sind, wobei jede der Wicklungen (45, 46, 47, 48, 49) aus zwei zueinander gesehnten Wicklungsteilen (85, 86) besteht.

21. Mehrphasige elektrische Maschine nach einem der vorhergehenden Ansprüche, **dadurch gekennzeichnet, dass** je zwei sich umfangsseitig gegenüberliegende, gegensinnig magnetisierte Klauenfinger (13, 14) einen axialen Abstand (A) ihrer Klauenfingerspitzen (15, 16) aufweisen, wobei der axiale Abstand (A) der Klauenfingerspitzen (15, 16) zwischen dem 0,7-fachen und dem 1,0-fachen der axialen Kernkörperlänge (D) liegt.

22. Mehrphasige elektrische Maschine nach einem der vorhergehenden Ansprüche, **dadurch gekennzeichnet, dass** die Klauenfinger (13, 14) an ihren hinsichtlich der Umlaufrichtung auflaufenden Kanten (98') und/oder ablaufenden Kanten (98) eine Anfasung aufweisen.

23. Mehrphasige elektrische Maschine nach einem der vorhergehenden Ansprüche, **dadurch gekennzeichnet, dass** das Verhältnis der Jochhöhe (R) zum Außenumfang des Stators kleiner als 0,015 ist.

24. Mehrphasige elektrische Maschine nach einem der vorhergehenden Ansprüche, **gekennzeichnet durch** mindestens einen Radiallüfter (25, 26), der an einer axialen Stirnfläche des Rotors montiert ist, wobei der Radiallüfter (25, 26) einen überwiegend radialen Luftstrom erzeugt, der auf einen Teil der zwei Wickelköpfe (27, 28) bildenden Wickelkopfverbindungen (56) der Wicklungen (45, 46, 47, 48, 49) gerichtet ist.

25. Mehrphasige elektrische Maschine nach einem der vorhergehenden Ansprüche, **dadurch gekennzeichnet, dass** die Wicklungen miteinander verschaltet sind, wobei die Verschaltung in der Nähe eines Wickelkopfes oder im Gleichrichter angeordnet sind.

26. Mehrphasige elektrische Maschine nach Anspruch 24, **dadurch gekennzeichnet, dass** die Wicklungen in Verschaltungspunkten miteinander verschaltet sind, wobei mindestens zwei zu verschaltende Wicklungen aus benachbarten Nuten austreten.

27. Verfahren zur Herstellung einer mehrphasigen elektrischen Maschine, insbesondere einer elektrischen Maschine nach mindestens einem der vorhergehenden Ansprüche, mit einem Stator, der einen eine umfängliche Nutteilung aufweisenden Kernkörper und eine Wicklungsanordnung mit mehreren, Phasen bildenden Wicklungen aufweist, wobei die Phasenanzahl fünf ist und zur Erstellung des Stators eine Anzahl von Wicklungen entsprechend der Phasenanzahl oder einem Vielfachen der Phasenanzahl sequentiell in den Kernkörper montiert werden, wobei die Wicklungen in zugeordneten Nuten einliegende Wicklungsabschnitte aufweisen, zwischen denen jeweils eine Wickelkopfverbindung ausgebildet ist und die Wickelkopfverbindungen der einzelnen Wicklungen radial lagenweise zueinander geschichtet werden.

28. Verfahren nach Anspruch 27, **dadurch gekennzeichnet, dass** die Wicklungen als einfache Wicklungen gewickelt werden.

29. Verfahren nach Anspruch 28, **dadurch gekennzeichnet, dass** radial direkt benachbarte Wicklungen mit einem Nutversatz zueinander versetzt in den Kernkörper montiert werden und der Nutversatz 5*m+4 Nuten beträgt, wobei m ganzzahlig größer oder gleich 0 ist.

30. Verfahren nach Anspruch 27, **dadurch gekennzeichnet, dass** die Wicklungen als verteilte Wicklungen gewickelt werden.

31. Verfahren nach Anspruch 30, **dadurch gekennzeichnet, dass** radial direkt benachbarte Wicklungen mit einem Nutversatz zueinander versetzt in den Kernkörper montiert werden und der Nutversatz 5*m+1 Nuten beträgt, wobei m ganzzahlig größer oder gleich 0 ist.

32. Verfahren nach einem der Ansprüche 27 bis 31, **dadurch gekennzeichnet, dass** die Wicklungen als Schleifenwicklungen oder als Wellenwicklungen ausgebildet werden.

33. Verfahren nach einem der Ansprüche 27 bis 32, **dadurch gekennzeichnet, dass** zur Erstellung des Stators folgende Schritte ausgeführt werden:
- lagenweises Einlegen der Wicklungen in ein ebenes, zwei Statorblechpaketenden aufweisendes Statorblechpaket,
- Rundbiegen des Statorblechpakets mit einliegenden Wicklungen und
- stoffschlüssiges Verbinden der beiden Statorblechpaketenden, wobei ein zylindrischer Kernkörper des Stators entsteht.

34. Verfahren nach einem der Ansprüche 27 bis 33, **dadurch gekennzeichnet, dass** die Wickelkopfverbindungen Wickelköpfe bilden, die vor dem Einlegen der Wicklungen in das ebene Statorpaket verprägt werden und durch das Verprägen eine vorgegebene Form annehmen, wobei die Gesamthöhe aller zueinander geschichteten Wicklungen in etwa der Nuttiefe entspricht.

35. Verfahren nach einem der Ansprüche 27 bis 34, **dadurch gekennzeichnet, dass** die Wicklungsabschnitte der Wicklungen vor dem Einlegen der Wicklungen in das ebene Statorpaket verprägt werden und durch das Verprägen eine vorgegebene Form annehmen, wobei sich diese an den Nutquerschnitt anpasst.

36. Verfahren nach einem der Ansprüche 27 bis 35, **dadurch gekennzeichnet, dass** zur Erstellung des Stators folgende Schritte ausgeführt werden:
- Vorfertigen der Wicklungen aus mindestens einem durchgehenden Wickeldraht in eine Form von im Wesentlichen ebenen ringförmigen Wicklungseinheiten,
- Verformen von ringförmigen Wicklungseinheiten in sternförmige Wicklungseinheiten mit Wicklungsabschnitten, zwischen denen jeweils eine Wickelkopfverbindung ausgebildet ist und
- aufeinander folgendes Montieren der im Wickelkopf radial direkt benachbarten Wicklungen um eine vorgegebene Anzahl von Nutteilungen zueinander versetzt in die Nuten eines zylindrischen Kernkörpers.

37. Verfahren nach dem vorhergehenden Anspruch, **dadurch gekennzeichnet, dass** die sternförmigen Wicklungseinheiten im Wesentlichen in zwei Hälften aufgeteilt und um eine Polteilung gegeneinander verdreht werden, wobei Wicklungseinheiten für verteilte Wicklungen entstehen.

## Claims

1. Polyphase electric machine, in particular polyphase generator (1), comprising a stator (3), which has a core body (4) having a circumferential slot pitch and a winding arrangement (5) comprising a plurality of phase-forming windings (45, 46, 47, 48, 49), wherein the number of phases is five, wherein each winding (45, 46, 47, 48, 49) and each slot (35, 36, 37, 38, 39) in a slot group extending over a pole pitch is assigned to one of the phases and the windings (45, 46, 47, 48, 49) have winding sections (55) which lie in assigned slots (35, 36, 37, 38, 39) and between which in each case one end-winding connection (56) is formed, **characterized in that** the end-winding connections (56) of different windings (45, 46, 47, 48, 49) are arranged in radial layers with respect to one another.

2. Polyphase electric machine according to Claim 1, **characterized in that** the respective end-winding connections (56) of a winding (45, 46, 47, 48, 49) are arranged in a single radial layer (H, I, J, K, L).

3. Polyphase electric machine according to one of the preceding claims, **characterized in that** the number of slots (35, 36, 37, 38) corresponds to a multiple of the number of phases.

4. Polyphase electric machine according to one of the preceding claims, **characterized in that** the number of radial layers (H, I, J, K, L) corresponds to the number of phases or to a multiple of the number of phases.

5. Polyphase electric machine according to one of the preceding claims, **characterized in that** the windings (40, 41, 42, 43, 44) are single windings or distributed windings (45, 46, 47, 48, 49).

6. Polyphase electric machine according to one of the preceding claims, **characterized in that** the windings (40, 41, 42, 43, 44) are in the form of lap windings or wave windings (50, 51, 52, 53, 54).

7. Polyphase electric machine according to one of the preceding claims, **characterized in that** each of the slots (35, 36, 37, 38, 39) has a maximum slot width (O) which is greater than twice the diameter (P) of a winding wire (60) from which the windings (45, 46, 47, 48, 49) are wound.

8. Polyphase electric machine according to one of the preceding claims, **characterized in that** each of the slots (35, 36, 37, 38, 39) has a slot opening (67) at the radially inner end of said slot, the slot opening width (N) of said slot opening being less than twice the diameter (P) of the winding wire (60).

9. Polyphase electric machine according to one of the preceding claims, **characterized in that** the maximum slot width (O) is less than a yoke height (R) of the core body (4) in the form of a stator laminate stack.

10. Polyphase electric machine according to one of the preceding claims, **characterized in that** the ratio of the maximum slot width (O) to the yoke height (R) of the stator laminate stack is in the range of between 0.5 and 0.9.

11. Polyphase electric machine according to one of the preceding claims, **characterized in that** each of the slots (35, 36, 37, 38, 39) has a slot depth (Q), wherein the ratio of the yoke height (R) to the slot depth (Q) is in the range of between 0.3 and 0.5.

12. Polyphase electric machine according to one of the preceding claims, **characterized by** a rotor (10) having a pole number which, multiplied by the number of phases, gives the number of slots (35, 36, 37, 38, 39).

13. Polyphase electric machine according to one of the preceding claims, **characterized in that** the rotor has a magnetically active part (30) having an outer diameter (B) and having an axial length (C), wherein the outer diameter (B) is greater than the length (C) of the magnetically active part (30).

14. Polyphase electric machine according to one of the preceding claims, **characterized in that** the rotor (10) is constructed as a claw-pole rotor comprising two magnet wheel halves and has a core lying axially between the magnet wheel halves, wherein the claws which are substantially trapezoidal have pole faces which are opposite the stator bore.

15. Polyphase electric machine according to one of the preceding claims, **characterized in that** permanent magnets (94) for leakage flux compensation are arranged between the claw fingers (13, 14).

16. Polyphase electric machine according to one of the preceding claims, **characterized in that** the core body (4) has an axial core body length (D) and the permanent magnets (94) have a substantially uniform axial magnet length (M), wherein the axial magnet length (M) is between 0.6 and 1.2 times the axial core body length (D).

17. Polyphase electric machine according to one of the preceding claims, **characterized by** a rectifier in a bridge circuit (21) to which the windings (45, 46, 47, 48, 49) are connected.

18. Polyphase electric machine according to one of the preceding claims, **characterized in that** the bridge circuit comprises ten diode elements.

19. Polyphase electric machine according to one of the preceding claims, **characterized in that** the windings (45, 46, 47, 48, 49) are interconnected in a pentagram arrangement (71).

20. Polyphase electric machine according to one of the preceding claims, **characterized in that** the windings (45, 46, 47, 48, 49) are interconnected in a chorded star arrangement (84), wherein each of the windings (45, 46, 47, 48, 49) comprises two winding parts (85, 86) which are chorded with respect to one another.

21. Polyphase electric machine according to one of the preceding claims, **characterized in that** in each case two circumferentially opposite, oppositely magnetised claw fingers (13, 14) have an axial spacing (A) of their claw fingertips (15, 16), wherein the axial spacing (A) of the claw fingertips (15, 16) is between 0.7 and 1.0 times the axial core body length (D).

22. Polyphase electric machine according to one of the preceding claims, **characterized in that** the claw fingers (13, 14) have a bevel at their leading, in respect of the circumferential direction, edges (98') and/or trailing edges (98).

23. Polyphase electric machine according to one of the preceding claims, **characterized in that** the ratio of the yoke height (R) to the outer circumference of the stator is less than 0.015.

24. Polyphase electric machine according to one of the preceding claims, **characterized by** at least one radial fan (25, 26), which is fitted on an axial end face of the rotor, wherein the radial fan (25, 26) generates a predominantly radial air flow which is directed towards some of the end winding connections (56) of the windings (45, 46, 47, 48, 49), which end winding connections form two end windings (27, 28).

25. Polyphase electric machine according to one of the preceding claims, **characterized in that** the windings are interconnected with one another, wherein the interconnection is arranged in the vicinity of an end winding or in the rectifier.

26. Polyphase electric machine according to Claim 24, **characterized in that** the windings are interconnected with one another at interconnection points, wherein at least two windings to be interconnected emerge from adjacent slots.

27. Method for producing a polyphase electric machine, in particular an electric machine according to at least one of the preceding claims, comprising a stator, which has a core body having a circumferential slot pitch and a winding arrangement comprising a plurality of phase-forming windings, wherein the number of phases is five and a number of windings corresponding to the number of phases or to a multiple of the number of phases are fitted sequentially in the core body in order to produce the stator, wherein the windings have winding sections lying in assigned slots, between which winding sections in each case one end winding connection is formed, and the end winding connections of the individual windings are layered in radial layers with respect to one another.

28. Method according to Claim 27, **characterized in that** the windings are wound as single windings.

29. Method according to Claim 28, **characterized in that** radially directly adjacent windings are fitted in the core body offset with respect to one another with a slot offset, and the slot offset is 5*m+4 slots, where m is an integral greater than or equal to 0.

30. Method according to Claim 27, **characterized in that** the windings are wound as distributed windings.

31. Method according to Claim 30, **characterized in that** radially directly adjacent windings are fitted in the core body offset with respect to one another with a slot offset, and the slot offset is 5*m+1 slots, where m is an integral greater than or equal to 0.

32. Method according to one of Claims 27 to 31, **characterized in that** the windings are in the form of lap windings or in the form of wave windings.

33. Method according to one of Claims 27 to 32, **characterized in that** the following steps are implemented in order to produce the stator:
- the windings are laid in layers in a planar stator laminate stack having two stator laminate stack ends,
- the stator laminate stack with the windings inserted is bent round, and
- the two stator laminate stack ends are cohesively connected, wherein a cylindrical core body of the stator is produced.

34. Method according to one of Claims 27 to 33, **characterized in that** the end winding connections form end windings which are embossed prior to the windings being laid in the planar stator stack and, as a result of the embossing, assume a predetermined shape, wherein the total height of all of the windings which are layered with respect to one another approximately corresponds to the slot depth.

35. Method according to one of Claims 27 to 34, **characterized in that** the winding sections of the windings are embossed prior to the windings being laid in the planar stator stack and, as a result of the embossing, assume a predetermined shape, wherein this shape is matched to the slot cross section.

36. Method according to one of Claims 27 to 35, **characterized in that** the following steps are implemented in order to produce the stator:
- the windings are prefabricated from at least one continuous winding wire into a form of substantially planar ring-shaped winding units,
- ring-shaped winding units are deformed to give star-shaped winding units with winding sections between which in each case one end winding connection is formed, and
- the windings which are radially directly adjacent in the end winding are fitted successively in the slots of a cylindrical core body, offset with respect to one another by a predetermined number of slot pitches.

37. Method according to the preceding claim, **characterized in that** the star-shaped winding units are divided substantially into two halves and are turned towards one another through a pole pitch, wherein winding units for distributed windings are produced.

## Revendications

1. Machine électrique polyphasée, notamment générateur polyphasé (1), avec un stator (3) comportant un corps de noyau (4) comportant une séparation rainurée périphérique et un agencement de bobinage (5) doté de plusieurs bobinages (45, 46, 47, 48, 49) formant des phases et le nombre de phases étant de cinq, chaque bobinage (45, 46, 47, 48, 49) et chaque rainure (35, 36, 37, 38, 39) d'un groupe de rainures s'étendant au-delà d'une séparation polarisée étant associés à une des phases et les bobinages (45, 46, 47, 48, 49) comportant des sections de bobinage (55) reposant dans les rainures (35, 36, 37, 38, 39) associées entre lesquelles une jonction de tête de bobine (56) est respectivement réalisée, **caractérisée en ce que** les jonctions de tête de bobine (56) de différents bobinages (45, 46, 47, 48, 49) sont disposées en couches dans le plan radial les unes par rapport aux autres.

2. Machine électrique polyphasée selon la revendication 1, **caractérisée en ce que** les jonctions de tête de bobine (56) respectives d'un bobinage (45, 46, 47, 48, 49) sont disposées dans une couche radiale (H, I, J, K, L) unique.

3. Machine électrique polyphasée selon l'une quelconque des revendications précédentes, **caractérisée en ce que** le nombre de rainures (35, 36, 37, 38) correspond à un multiple du nombre de phases.

4. Machine électrique polyphasée selon l'une quelconque des revendications précédentes, **caractérisée en ce que** le nombre de couches radiales (H, I, J, K, L) correspond au nombre de phases ou à un multiple du nombre de phases.

5. Machine électrique polyphasée selon l'une quelconque des revendications précédentes, **caractérisée en ce que** les bobinages (40, 41, 42, 43, 44) sont des bobinages simples ou des bobinages (45, 46, 47, 48, 49) divisés.

6. Machine électrique polyphasée selon l'une quelconque des revendications précédentes, **caractérisée en ce que** les bobinages (40, 41, 42, 43, 44) prennent la forme de bobinages imbriqués ou de bobinages ondulés (50, 51, 52, 53, 54).

7. Machine électrique polyphasée selon l'une quelconque des revendications précédentes, **caractérisée en ce que** chacune des rainures (35, 36, 37, 38, 39) présente une largeur de rainure (O) maximale supérieure au double du diamètre (P) du fil de bobinage (60) à partir duquel les bobinages (45, 46, 47, 48, 49) sont enroulés.

8. Machine électrique polyphasée selon l'une quelconque des revendications précédentes, **caractérisée en ce que** chacune des rainures (35, 36, 37, 38, 39) comporte au niveau de son extrémité intérieure dans le plan radial une fente de rainure (67) dont la largeur de fente de rainure (N) est inférieure au double du diamètre (P) du fil de bobinage (60).

9. Machine électrique polyphasée selon l'une quelconque des revendications précédentes, **caractérisée en ce que** la largeur de rainure (O) maximale est inférieure à la hauteur de joug (R) du corps de noyau (4) prenant la forme d'un bloc feuilleté de stator.

10. Machine électrique polyphasée selon l'une quelconque des revendications précédentes, **caractérisée en ce que** le rapport de la largeur de rainure (0) maximale sur la hauteur de joug (R) du bloc feuilleté de stator se situe dans la plage comprise entre 0,5 et 0,9.

11. Machine électrique polyphasée selon l'une quelconque des revendications précédentes, **caractérisée en ce que** chacune des rainures (35, 36, 37, 38, 39) comporte une profondeur de rainure (Q), le rapport de la hauteur de joug (R) sur la profondeur de rainure (Q) se situant dans la plage comprise entre 0,3 et 0,5.

12. Machine électrique polyphasée selon l'une quelconque des revendications précédentes, **caractérisée par** la présence d'un rotor (10) doté d'un nombre de pôles qui donne, multiplié par le nombre de phases, le nombre de rainures (35, 36, 37, 38, 39).

13. Machine électrique polyphasée selon l'une quelconque des revendications précédentes, **caractérisée en ce que** le rotor comporte une partie (30) active sur le plan magnétique présentant un diamètre extérieur (B) et une longueur axiale (C), le diamètre extérieur (B) étant supérieur à la longueur (C) de la partie (30) active sur le plan magnétique.

14. Machine électrique polyphasée selon l'une quelconque des revendications précédentes, **caractérisée en ce que** le rotor (10) est structuré à la façon d'un pôle à griffes doté de deux moitiés de rotor et d'un noyau reposant dans le plan axial entre les moitiés de rotor, les griffes pour l'essentiel en forme de trapèze comportant des surfaces de pôle placées en face de l'alésage en colonne.

15. Machine électrique polyphasée selon l'une quelconque des revendications précédentes, **caractérisée en ce que** des aimants permanents (94) sont disposés entre les doigts de griffe (13, 14) en vue de compenser le flux de fuite.

16. Machine électrique polyphasée selon l'une quelconque des revendications précédentes, **caractérisée en ce que** le corps de noyau (4) comporte une longueur de corps de noyau (D) axiale et que les aimants permanents (94) comportent une longueur d'aimant (M) axiale pour l'essentiel homogène, la longueur d'aimant (M) axiale se situant entre 0,6 fois et 1,2 fois la longueur de corps de noyau (D) axiale.

17. Machine électrique polyphasée selon l'une quelconque des revendications précédentes, **caractérisée par** la présence d'un redresseur relié au moyen d'un circuit en pont (21) reliant les bobinages (45, 46, 47, 48, 49).

18. Machine électrique polyphasée selon l'une quelconque des revendications précédentes, **caractérisée en ce que** le circuit en pont comprend dix éléments de diode.

19. Machine électrique polyphasée selon l'une quelconque des revendications précédentes, **caractérisée en ce que** les bobinages (45, 46, 47, 48, 49) sont connectés selon un agencement en pentagramme (71).

20. Machine électrique polyphasée selon l'une quelconque des revendications précédentes, **caractérisée en ce que** les bobinages (45, 46, 47, 48, 49) sont connectés selon un agencement en étoile (84) sous-tendu, chacun des bobinages (45, 46, 47, 48, 49) se composant de deux parties de bobinage (85, 86) sous-tendues l'une par rapport à l'autre.

21. Machine électrique polyphasée selon l'une quelconque des revendications précédentes, **caractérisée en ce que** respectivement deux doigts de griffe (13, 14) de magnétisme opposé et opposés par rapport au côté périphérique présentent une certaine distance (A) axiale entre leurs bouts de doigt de griffe (15, 16), la distance (A) axiale des bouts de doigt de griffe (15, 16) se situant entre 0,7 fois et 1,0 fois la longueur de corps de noyau (D) axiale.

22. Machine électrique polyphasée selon l'une quelconque des revendications précédentes, **caractérisée en ce que** les doigts de griffe (13, 14) comportent un chanfreinage au niveau de leurs arêtes (98') montantes par rapport à la direction circonférentielle et/ou par rapport aux arêtes (98) descendantes.

23. Machine électrique polyphasée selon l'une quelconque des revendications précédentes, **caractérisée en ce que** le rapport de la hauteur de joug (R) sur la périphérie extérieure du stator est inférieur à 0,015.

24. Machine électrique polyphasée selon l'une quelconque des revendications précédentes, **caractérisée par** la présence d'au moins un ventilateur radial (25, 26) monté au niveau d'une surface avant axiale du rotor, le ventilateur radial (25, 26) produisant un flux d'air principalement radial orienté sur une partie des jonctions de tête de bobine (56) des bobinages (45, 46, 47, 48, 49) formant les deux têtes de bobine (27, 28).

25. Machine électrique polyphasée selon l'une quelconque des revendications précédentes, **caractérisée en ce que** les bobinages sont connectés entre eux, les connexions étant disposées à proximité d'une tête de bobine ou dans le redresseur.

26. Machine électrique polyphasée selon la revendication 24, **caractérisée en ce que** les bobinages sont connectés entre eux au niveau des points de connexion, au moins deux bobinages à connecter sortant de rainures connexes.

27. Procédé de fabrication d'une machine électrique polyphasée, notamment d'une machine électrique selon au moins l'une quelconque des revendications précédentes, avec un stator comportant une séparation rainurée périphérique comportant un corps de noyau et un agencement de bobinage avec plusieurs bobinages formant des phases, le nombre de phases étant de cinq et un nombre de bobinages correspondant au nombre de phases ou à un multiple du nombre de phases étant monté séquentiellement dans le corps de noyau pour réaliser le stator, les bobinages comportant dans les rainures associées les sections de bobinage encastrées entre lesquelles une jonction de tête de bobine est respectivement réalisée et les jonctions de tête de bobine des bobinages individuels étant disposées en couches radiales les unes par rapport aux autres.

28. Procédé selon la revendication 27, **caractérisé en ce que** les bobinages sont enroulés comme des bobinages simples.

29. Procédé selon la revendication 28, **caractérisé en ce que** les bobinages directement connexes dans le plan radial sont montés de façon décalée dans le corps de noyau avec un déport de rainure et que le déport de rainure comporte 5*m+4 rainures, m étant un nombre entier supérieur ou égal 0.

30. Procédé selon la revendication 27, **caractérisé en ce que** les bobinages sont enroulés sous la forme de bobinages divisés.

31. Procédé selon la revendication 30, **caractérisé en ce que** les bobinages directement connexes dans le plan radial sont montés de façon décalée les uns par rapport aux autres dans le corps de noyau avec un déport de rainure et que le déport de rainure comporte 5*m+1 rainures, m étant un nombre entier supérieur ou égal à 0.

32. Procédé selon l'une quelconque des revendications 27 à 31, **caractérisé en ce que** les bobinages prennent la forme de bobinages imbriqués ou de bobinages ondulés.

33. Procédé selon l'une quelconque des revendications 27 à 32, **caractérisé en ce que** la réalisation du stator se fait par le biais des étapes suivantes :
- insertion en couches des bobinages dans un bloc feuilleté de stator plan comportant deux extrémités de bloc feuilleté de stator ;
- flexion circulaire du bloc feuilleté de stator comprenant les bobinages insérés ; et
- liaison réalisée par complémentarité de matières des deux extrémités de bloc feuilleté de stator, engendrant un corps de noyau cylindrique du stator.

34. Procédé selon l'une quelconque des revendications 27 à 33, **caractérisé en ce que** les têtes de bobine forment les jonctions de tête de bobine, lesdites têtes étant façonnées avant l'insertion des bobinages dans le bloc de stator plan et prenant une forme prédéfinie du fait du façonnage, la hauteur totale de tous les bobinages empilés correspondant approximativement à la profondeur de rainure.

35. Procédé selon l'une quelconque des revendications 27 à 34, **caractérisé en ce que** les sections de bobinage des bobinages sont façonnées avant l'insertion des bobinages dans le bloc de stator plan et prennent une forme prédéfinie du fait du façonnage, celle-ci s'adaptant à la section transversale de la rainure.

36. Procédé selon l'une quelconque des revendications 27 à 35, **caractérisé en ce que** la réalisation du stator se fait par le biais des étapes suivantes :
- fabrication préalable des bobinages à partir d'au moins un fil de bobinage pour obtenir une forme d'unités de bobinage annulaires pour l'essentiel planes ;
- formage des unités de bobinage annulaires pour former des unités de bobinage en forme d'étoile à sections de bobinage entre lesquelles une jonction de tête de bobine est respectivement réalisée ; et
- montage successif des bobinages directement connexes dans le plan radial dans la tête de bobine pour décaler un nombre prédéfini de séparations rainurées les unes par rapport aux autres dans les rainures d'un corps de noyau cylindrique.

37. Procédé selon la revendication précédente, **caractérisé en ce que** les unités de bobinage en étoiles sont divisées pour l'essentiel en deux moitiés et sont tournées l'une contre l'autre dans une séparation polarisée, engendrant des unités de bobinage pour bobinages divisés.
